(19) Europäisches Patentamt
European Patent Office
Office européen des brevets

(11) EP 4 742 710 A1

(12) EUROPEAN PATENT APPLICATION
published in accordance with Art. 153(4) EPC

(43) Date of publication:
13.05.2026 Bulletin 2026/20

(51) International Patent Classification (IPC):
H04W 4/70 (2018.01)

(21) Application number: 24853469.5

(22) Date of filing: 16.07.2024

(52) Cooperative Patent Classification (CPC):
H04W 4/70; H04W 52/30; H04W 52/38;
H04W 72/0446; H04W 72/0453; H04W 72/40;
H04W 74/0808

(86) International application number:
PCT/CN2024/105757

(87) International publication number:
WO 2025/036057 (20.02.2025 Gazette 2025/08)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 11.08.2023 CN 202311018798

(71) Applicant: Huawei Technologies Co., Ltd.
Shenzhen, Guangdong 518129 (CN)

(72) Inventors:
• JIAO, Ruicheng
  Shenzhen, Guangdong 518129 (CN)
• HE, Hongli
  Shenzhen, Guangdong 518129 (CN)
• LI, Chao
  Shenzhen, Guangdong 518129 (CN)

(74) Representative: Pfenning, Meinig & Partner mbB
Patent- und Rechtsanwälte
Theresienhöhe 11a
80339 München (DE)

(54) COMMUNICATION METHOD AND APPARATUS

(57) This application provides a communication method and apparatus. The communication method includes: receiving at least one piece of control information, where each piece of control information is associated with at least one time-frequency resource, and each time-frequency resource corresponds to at least one first resource block; and sending at least one feedback channel on a first frequency domain resource, where each feedback channel corresponds to one piece of control information, the first frequency domain resource includes N first resource blocks and M second resource blocks, each feedback channel occupies at least one first resource block, transmit power of the first frequency domain resource is less than or equal to maximum transmit power, a ratio of transmit power of each second resource block to transmit power of each first resource block that is located in a same resource block set as the second resource block is $\beta$, $\beta$ is less than or equal to 1, and N and M are integers greater than or equal to 1. In this application, the ratio of the transmit power of the first resource block to the transmit power of the second resource block is specified, to increase the transmit power of the first resource block, and improve feedback channel detection performance.

500

First terminal apparatus — Second terminal apparatus

S510: At least one piece of control information

S520: Determine a first frequency domain resource

S530: At least one feedback channel

FIG. 5

## Description

This application claims priority to Chinese Patent Application No. 202311018798.8, filed with the China National Intellectual Property Administration on August 11, 2023, and entitled "COMMUNICATION METHOD AND APPARATUS", which is incorporated herein by reference in its entirety.

## TECHNICAL FIELD

This application relates to the communication field, and more specifically, to a communication method and apparatus.

## BACKGROUND

In sidelink (sidelink, SL) communication, enabling an unlicensed spectrum is an important evolution direction. In the unlicensed spectrum, a terminal may use a spectrum resource through contention. In a possible manner, the terminal contends for a channel (channel occupancy time, COT) in a listen-before-talk (listen-before-talk, LBT) manner, to use the COT. If the terminal successfully performs the LBT, the terminal may send data by using the COT, and the terminal may further share the COT with another terminal.

The terminal apparatus may send feedback information through a physical sidelink feedback channel (physical sidelink feedback channel, PSFCH), and the feedback information is carried in a dedicated physical resource block (dedicated PRB). However, in the unlicensed spectrum, in an actual feedback process of a receive end, to meet a channel occupation requirement, a common physical resource block (common PRB) is introduced to occupy a frequency domain resource. However, transmit power of the dedicated physical resource block may be split to the common physical resource block, affecting PSFCH detection performance.

## SUMMARY

This application provides a communication method and apparatus, to increase transmit power of a first resource block used to carry feedback information, and improve PSFCH detection performance.

According to a first aspect, a communication method is provided. The method may be performed by a first terminal apparatus, or may be performed by a chip or a circuit used in the first terminal apparatus. This is not limited in this application. For ease of description, the following uses an example in which the method is performed by the first terminal apparatus for description.

The method includes: A first terminal apparatus receives at least one piece of control information, where each piece of control information is associated with at least one time-frequency resource, and each time-frequency resource corresponds to at least one first resource block. The first terminal apparatus sends at least one feedback channel on a first frequency domain resource, where each feedback channel corresponds to one time-frequency resource associated with one piece of control information, the first frequency domain resource includes N first resource blocks and M second resource blocks, each feedback channel occupies at least one first resource block, transmit power of the first frequency domain resource is less than or equal to maximum transmit power, a ratio of transmit power of each second resource block to transmit power of each first resource block that is located in a same resource block set as the second resource block is $\beta$; $\beta$ is less than or equal to 1, and N and M are integers greater than or equal to 1.

In embodiments of this application, the first resource block is used to carry feedback information in the feedback channel, and the second resource block is used to occupy a channel bandwidth. A relationship between the transmit power of the second resource block and the transmit power of the first resource block is specified, to ensure that the first resource block can occupy sufficient transmit power, and improve transmit quality of the feedback channel, thereby improving feedback channel detection performance.

According to the first aspect, in some implementations of the first aspect, the method further includes: allocating transmit power of an $i^{th}$ feedback channel to the M second resource blocks and the N first resource blocks in the first frequency domain resource, where i is greater than or equal to 1.

According to the first aspect, in some implementations of the first aspect, the method further includes: determining transmit power of each first resource block and transmit power of each second resource block in the first frequency domain resource based on a quantity T of sent feedback channels, transmit power of each feedback channel, $\beta$, the quantity N of first resource blocks in the first frequency domain resource, and the quantity M of second resource blocks in the first frequency domain resource.

According to the first aspect, in some implementations of the first aspect, the method includes:

$$P_{1,avg} = P - 10log_{10}(N/T + M \times \beta/T);$$

$$P_{2,avg} = P - 10log_{10}(N/(\beta \times T) + M/T);$$

or

$$P_{2,avg} = P_{1,avg} - 10log_{10}\left(\frac{1}{\beta}\right).$$

$P$ is the transmit power of each feedback channel, $P_{1,avg}$ is the transmit power of each first resource block in the first frequency domain resource, and $P_{2,avg}$ is the transmit power of each second resource block in the first frequency domain resource.

According to the first aspect, in some implementations of the first aspect, the method further includes: allocating transmit power of an $i^{th}$ feedback channel to first resource block occupied by the $i^{th}$ feedback channel and second resource block that is located in a same resource block set as the $i^{th}$ feedback channel, where i is greater than or equal to 1.

According to the first aspect, in some implementations of the first aspect, the method further includes: determining, based on a quantity Ti of feedback channels that are located in the same resource block set as the $i^{th}$ feedback channel, the transmit power of the $i^{th}$ feedback channel, a quantity ki of first resource blocks occupied by the $i^{th}$ feedback channel, a quantity Mi of second resource blocks that are located in the same resource block set as the $i^{th}$ feedback channel, and $\beta$, transmit power of each first resource block occupied by the $i^{th}$ feedback channel and transmit power of each second resource block that is located in the same resource block set as the $i^{th}$ feedback channel.

According to the first aspect, in some implementations of the first aspect, the method further includes:

$$P_{1,avg}(i) = P(i) - 10log_{10}(ki + Mi \times \beta/Ti);$$

$$P_{2,avg}(i) = P(i) - 10log_{10}(ki/\beta + Mi/Ti);$$

or

$$P_{2,avg}(i) = P_{1,avg}(i) - 10log_{10}\left(\frac{1}{\beta}\right).$$

$P(i)$ is the transmit power of the $i^{th}$ feedback channel, $P_{1,avg}(i)$ is the transmit power of each first resource block occupied by the $i^{th}$ feedback channel, and $P_{2,avg}(i)$ is the transmit power of each second resource block that is located in the same resource block set as the $i^{th}$ feedback channel.

According to the first aspect, in some implementations of the first aspect, the method further includes: determining transmit power of each first resource block in the first frequency domain resource and transmit power of each second resource block in the first frequency domain resource based on the maximum transmit power, the quantity M of all second resource blocks in the first frequency domain resource, the quantity N of all first resource blocks in the first frequency domain resource, and $\beta$.

According to the first aspect, in some implementations of the first aspect, the method further includes:

$$P_{1,avg} = P_{CMAX} - 10log_{10}(N + M \times \beta);$$

$$P_{2,avg} = P_{CMAX} - 10log_{10}(N/\beta + M);\ or$$

$$P_{2,avg} = \left(P_{1,\,avg} - 10log_{10}\left(\frac{1}{\beta}\right)\right).$$

$P_{CMAX}$ is the maximum transmit power, $P_{1,avg}$ is the transmit power of each first resource block in the first frequency domain resource, and $P_{2,avg}$ is the transmit power of each second resource block in the first frequency domain resource.

According to the first aspect, in some implementations of the first aspect, the method further includes: determining transmit power of an ith feedback channel based on the maximum transmit power, the quantity M of second resource blocks in the first frequency domain resource, the quantity N of first resource blocks in the first frequency domain resource, a quantity ki of first resource blocks occupied by the ith feedback channel, and $\beta$.

According to the first aspect, in some implementations of the first aspect, the method further includes:

$$P(i) = P_{\text{CMAX}} - 10log_{10}\left(\frac{N+M\times\beta}{ki+M\times\beta}\right).$$

$P_{\text{CMAX}}$ is the maximum transmit power, and $P(i)$ is the transmit power of the ith feedback channel.

According to the first aspect, in some implementations of the first aspect, the method further includes: determining the transmit power of the ith feedback channel based on the maximum transmit power, the quantity M of second resource blocks in the first frequency domain resource, the quantity N of first resource blocks in the first frequency domain resource, a quantity ki of first resource blocks occupied by the ith feedback channel, a quantity Mi of second resource blocks that are located in a same resource block set as the ith feedback channel, and $\beta$.

According to the first aspect, in some implementations of the first aspect, the method further includes:

$$P(i) = P_{\text{CMAX}} - 10log_{10}\left(\frac{N+M\times\beta}{ki+Mi\times\beta}\right).$$

$P_{\text{CMAX}}$ is the maximum transmit power, and $P(i)$ is the transmit power of the ith feedback channel.

According to the first aspect, in some implementations of the first aspect, both transmit power of each second resource block and transmit power of each first resource block do not exceed first power, and the first power is determined based on a downlink path loss.

According to the first aspect, in some implementations of the first aspect, the method further includes: the power of each second resource block is $P1 + 10log_{10}(\beta)$, the power of each first resource block is $P1$, and $P1$ is the first power.

According to the first aspect, in some implementations of the first aspect, the method further includes: determining transmit power of an ith feedback channel based on the quantity M of second resource blocks in the first frequency domain resource, a quantity ki of first resource blocks occupied by the ith feedback channel, the first power, and $\beta$.

According to the first aspect, in some implementations of the first aspect, the method further includes:

$$P(i) = P1 + 10log_{10}(ki + M \times \beta).$$

$P(i)$ is the transmit power of the ith feedback channel, and $P1$ is the first power.

According to the first aspect, in some implementations of the first aspect, the method further includes: determining transmit power of an ith feedback channel based on a quantity Mi of second resource blocks that are located in a same resource block set as the ith feedback channel, a quantity ki of first resource blocks occupied by the ith feedback channel, the first power, and $\beta$.

According to the first aspect, in some implementations of the first aspect, the method further includes:

$$P(i) = P1 + 10log_{10}(ki + Mi \times \beta).$$

$P(i)$ is the transmit power of the ith feedback channel, and $P1$ is the first power.

According to the first aspect, in some implementations of the first aspect, the method further includes: determining the transmit power of each first resource block based on the maximum transmit power, the first power, the quantity M of second resource blocks in a first frequency domain resource, the quantity N of first resource blocks in the first frequency domain resource, and $\beta$.

According to the first aspect, in some implementations of the first aspect, the method further includes:

$$P_{1,avg} = min(P_{\text{CMAX}} - 10log_{10}(N + M \times \beta), P1).$$

$P_{\text{CMAX}}$ is the maximum transmit power, $P1$ is the first power, and $P_{1,avg}$ is the transmit power of each first resource block.

According to the first aspect, in some implementations of the first aspect, the method further includes:

determining the transmit power of each second resource block based on transmit power of each first resource block and β.

According to the first aspect, in some implementations of the first aspect, the method further includes:

$$P_{2,avg} = \left( P_{1,avg} - 10log_{10}\left(\frac{1}{\beta}\right) \right).$$

$P_{1,avg}$ is the transmit power of each first resource block, and $P_{2,avg}$ is the transmit power of each second resource block.

According to the first aspect, in some implementations of the first aspect, the method further includes: determining transmit power of an $i^{th}$ feedback channel based on the maximum transmit power, the first power, the quantity M of second resource blocks in the first frequency domain resource, the quantity N of first resource blocks in the first frequency domain resource, a quantity ki of first resource blocks occupied by the $i^{th}$ feedback channel, and β.

According to the first aspect, in some implementations of the first aspect, the method further includes:

$$P(i) = min(P_{\text{CMAX}} - 10log_{10}(N + M \times \beta), P1) + 10log_{10}(ki + M \times \beta).$$

$P_{\text{CMAX}}$ is the maximum transmit power, $P1$ is the first power, and $P(i)$ is the transmit power of the $i^{th}$ feedback channel.

According to the first aspect, in some implementations of the first aspect, the method further includes: determining transmit power of an $i^{th}$ feedback channel based on the maximum transmit power, the first power, the quantity M of second resource blocks in the first frequency domain resource, the quantity N of first resource blocks in the first frequency domain resource, a quantity ki of first resource blocks occupied by the $i^{th}$ feedback channel, a quantity Mi of second resource blocks that are located in a same resource block set as the $i^{th}$ feedback channel, and β.

According to the first aspect, in some implementations of the first aspect, the method further includes:

$$P(i) = min(P_{\text{CMAX}} - 10log_{10}(N + M \times \beta), P1) + 10log_{10}(ki + Mi \times \beta).$$

$P_{\text{CMAX}}$ is the maximum transmit power, $P1$ is the first power, and $P$ is the transmit power of the $i^{th}$ feedback channel.

According to a second aspect, a communication apparatus is provided, and includes: a transceiver unit, configured to receive at least one piece of control information, where each piece of control information is associated with at least one time-frequency resource, and each time-frequency resource corresponds to at least one first resource block; a processing unit, configured to determine a first frequency domain resource, where the first frequency domain resource includes N first resource blocks and M second resource blocks, transmit power of the first frequency domain resource is less than or equal to maximum transmit power, a ratio of transmit power of each second resource block to transmit power of each first resource block that is located in a same resource block set as the second resource block is β, β is less than or equal to 1, and N and M are integers greater than or equal to 1; and the transceiver unit, further configured to send at least one feedback channel on the first frequency domain resource, where each feedback channel corresponds to one piece of control information, and each feedback channel occupies at least one first resource block.

The transceiver unit may perform receiving and sending according to the first aspect, and the processing unit may perform processing other than receiving and sending according to the first aspect.

According to a third aspect, a communication apparatus is provided, and includes a transceiver, a processor, and a memory. The processor is configured to control the transceiver to send and receive a signal. The memory is configured to store a computer program. The processor is configured to: invoke the computer program from the memory and run the computer program, to enable the communication apparatus to perform the method according to any one of the possible implementations of the first aspect or the second aspect.

Optionally, there are one or more processors, and there are one or more memories.

Optionally, the memory may be integrated with the processor, or the memory and the processor are separately disposed.

Optionally, the communication apparatus further includes a transmitter (transmitter machine) and a receiver (receiver machine).

According to a fourth aspect, a communication system is provided, and includes a first terminal apparatus, where the first terminal apparatus is configured to perform the method according to any one of the possible implementations of the first aspect.

According to a fifth aspect, a computer-readable storage medium is provided. The computer-readable storage medium stores a computer program or code. When the computer program or code is run on a computer, the computer is enabled to perform the method according to any one of the first aspect or the possible implementations of the first aspect.

According to a sixth aspect, a chip is provided, and includes at least one processor. The at least one processor is coupled to a memory. The memory is configured to store a computer program. The processor is configured to: invoke the computer program from the memory and run the computer program, to enable an apparatus in which a chip system is installed to perform the method according to any one of the first aspect or the possible implementations of the first aspect.

The chip may include an input circuit or interface for sending information or data, and an output circuit or interface for receiving information or data.

According to a seventh aspect, a computer program product is provided. The computer program product includes computer program code. When the computer program code is run on an apparatus, the apparatus is enabled to perform the method according to any one of the first aspect or the possible implementations of the first aspect.

## BRIEF DESCRIPTION OF DRAWINGS

FIG. 1 is a diagram of a wireless communication system applicable to an embodiment of this application.
FIG. 2 is a diagram of an interlace for a subcarrier spacing of 30 kHz according to an embodiment of this application;
FIG. 3 is a diagram of PSFCH transmission according to an embodiment of this application;
FIG. 4 is a diagram of PSFCH transmission according to an embodiment of this application;
FIG. 5 is a schematic flowchart of a communication method 400 according to an embodiment of this application;
FIG. 6 is a diagram of a structure of a communication apparatus 1000 according to an embodiment of this application;
FIG. 7 is a diagram of a structure of a communication apparatus 2000 according to an embodiment of this application; and
FIG. 8 is a diagram of a structure of a chip system 3000 according to an embodiment of this application.

## DESCRIPTION OF EMBODIMENTS

The following describes technical solutions of this application with reference to the accompanying drawings.

The technical solutions provided in this application may be applied to various communication systems, such as a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), and an internet of things (internet of things, IoT) communication system or another communication system.

In an example, the V2X communication may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, and vehicle-to-network (vehicle-to-network, V2N) communication. V2V means communication between vehicles. V2P means communication between a vehicle and a person (including a pedestrian, a bicyclist, a driver, a passenger, or the like). V2I means communication between a vehicle and an infrastructure. The infrastructure is, for example, a road side unit (road side unit, RSU) or a network device. There are two types of RSU: a terminal-type RSU and a base station-type RSU. Because the terminal-type RSU is arranged on a road side, the terminal-type RSU is in a non-mobile state, and mobility does not need to be considered. The base station-type RSU may implement timing synchronization and resource scheduling for a vehicle that communicates with the base station-type RSU. V2N means communication between a vehicle and a network device. It may be understood that the foregoing descriptions are examples, and are not limited in embodiments of this application. For example, V2X may further include NR system-based V2X communication in a current 3GPP Rel-16 version and a later version.

In addition, the technical solutions provided in this application may be further applied to an indoor commercial scenario, for example, communication between a mobile phone and a smart screen, and communication between a mobile phone and VR glasses.

A terminal apparatus in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal apparatus may be a device that provides a voice/data for a user, for example, a handheld device or a vehicle-mounted device that has a wireless connection function. Currently, some examples of the terminal are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a wearable device, a terminal apparatus in a 5G network, or a terminal apparatus in a future evolved public land mobile communication network (public land mobile network, PLMN). This is not limited in embodiments of this application. The terminal apparatus in embodiments of this application may be a terminal device, a vehicle, or UE. The terminal apparatus may alternatively be an in-vehicle communication module, for example, an on board unit (on board unit, OBU), an in-vehicle module, or a T-box. The terminal apparatus may alternatively be a road side unit (road side unit, RSU). The terminal apparatus may alternatively be a chip, and the chip may be built in a vehicle or built in the in-vehicle communication module. The terminal apparatus may alternatively be a chip system, and the chip system may include a chip, or may include a chip and another discrete device.

By way of example but not limitation, in embodiments of this application, the terminal apparatus may alternatively be a wearable device. The wearable device may also be referred to as an intelligent wearable device, and is a general term for wearable devices, for example, glasses, gloves, a watch, clothing, and shoes, that are developed through smart design of daily wear by using a wearable technology. The wearable device is a portable device that can be directly worn on a body or integrated into clothes or accessories of a user. The wearable device is a hardware device, and also implements a powerful function through software support, data exchange, and cloud interaction. In a broad sense, the intelligent wearable device includes a full-featured and large-sized device, for example, a smartwatch or smart glasses, that may implement complete or partial functions without depending on a smartphone, and includes a device that is dedicated to only one type of application function and that needs to be used in cooperation with another device like the smartphone, for example, various smart bands or smart jewelry for vital sign monitoring.

In embodiments of this application, the network device may be a device for communicating with the terminal apparatus. The network device may also be referred to as an access network device or a radio access network device. For example, the network device may be a base station. In embodiments of this application, the network device may be a radio access network (radio access network, RAN) node (or device) that connects the terminal apparatus to a wireless network. The base station may cover the following various names in a broad sense, or may be replaced with the following names, for example, a NodeB (NodeB), an evolved NodeB (evolved NodeB, eNB), a next generation NodeB (next generation NodeB, gNB), a relay station, an access point, a transmission point (transmission reception point, TRP), a transmitting point (transmitting point, TP), a master station, a secondary station, a multi-standard radio (multi-standard radio, MSR) node, a home base station, a network controller, an access node, a wireless node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), or a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device functioning as a base station in D2D communication, V2X communication, and M2M communication, a network side device in a 6G network, a device functioning as a base station in a future communication system, or the like. The base station may support networks using a same access technology or different access technologies. A specific technology and a specific device form that are used for the network device are not limited in embodiments of this application.

The base station may be fixed or mobile. For example, a helicopter or an uncrewed aerial vehicle may be configured as a mobile base station, and one or more cells may move based on a location of the mobile base station. In another example, a helicopter or an uncrewed aerial vehicle may be configured as a device for communicating with another base station.

In some deployments, the network device mentioned in embodiments of this application may be a device including a CU, a DU, or a CU and a DU, or a device including a control plane CU node (a central unit-control plane (central unit-control plane, CU-CP)), a user plane CU node (a central unit-user plane (central unit-user plane, CU-UP)), and a DU node.

In embodiments of this application, an apparatus configured to implement a function of the network device may be a network device; or may be an apparatus, for example, a chip system or a chip, that can support the network device in implementing the function, and the apparatus may be installed in the network device. In embodiments of this application, the chip system may include a chip, or may include a chip and another discrete device.

The network device and the terminal apparatus may be deployed on the land, including an indoor device, an outdoor device, a handheld device, or a vehicle-mounted device; or may be deployed on a water surface; or may be deployed on an airplane, a balloon, and a satellite in air. Scenarios in which the network device and the terminal apparatus are located are not limited in embodiments of this application. In addition, a scenario to which embodiments of this application are oriented may not include the network device.

It should be noted that the technical solutions of this application are mainly applied to a sidelink transmission scenario, and a used frequency band includes but is not limited to an unlicensed spectrum. The unlicensed spectrum includes but is not limited to a frequency band near 2.4 GHz, a frequency band near 5.8 GHz, and the like. In embodiments of this application, the terminal apparatus and the access network device can perform wireless communication (for example, perform uplink information transmission or downlink information transmission) by using an unlicensed spectrum resource. A licensed-assisted access (licensed-assisted access, LAA) technology, a dual connectivity (dual connectivity, DC) technology, an unlicensed-assisted access (standalone) technology, or the like may be used in a communication system. In addition, in embodiments of this application, wireless communication can be performed between the terminal apparatuses by using the unlicensed spectrum resource, for example, a sidelink unlicensed (sidelink unlicensed, SL-U).

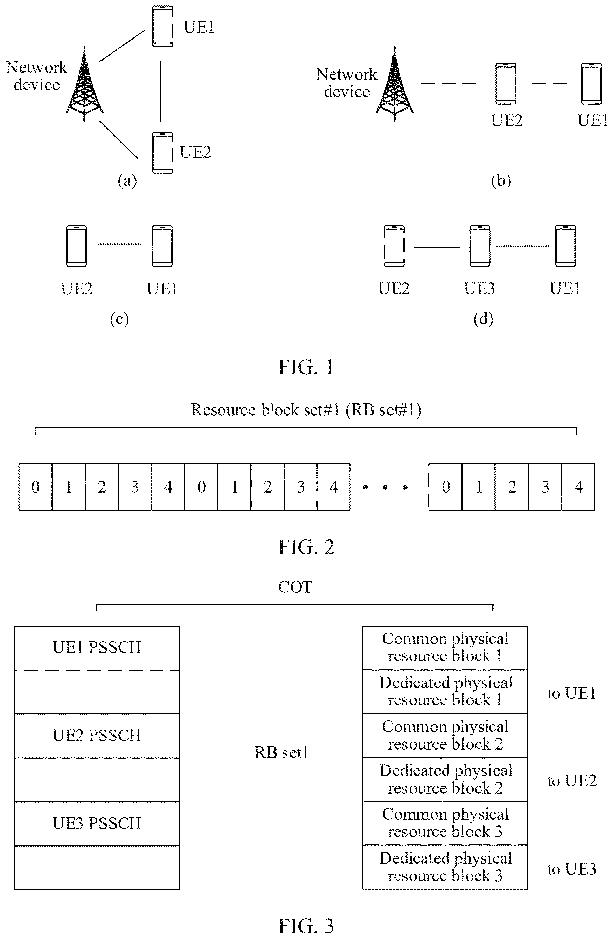

A communication system applicable to embodiments of this application is briefly described below with reference to FIG. 1.

FIG. 1 is a diagram of a wireless communication system applicable to an embodiment of this application. As shown in FIG. 1, the wireless communication system may include at least one terminal apparatus, for example, UE1, UE2, and UE3 shown in FIG. 1. Optionally, the wireless communication system may further include at least one network device, for example, a network device shown in FIG. 1. Optionally, the wireless communication system may not include the network device.

The network device and the terminal apparatus may communicate with each other. For example, the network device and the terminal apparatus may communicate with each other through a Uu interface, and a link (link) for communication between the network device and the terminal apparatus may be denoted as a Uu link. As shown in (a) in FIG. 1, the network device and the UE1 may directly communicate with each other. As shown in (b) in FIG. 1, the network device and the UE1 may alternatively communicate with each other via the UE2. Similarly, the network device and the UE2 may directly communicate with each other, or the network device and the UE2 may communicate with each other via the UE1. It may be understood that, the Uu link represents a connection relationship between the terminal apparatus and the network device, and is a logical concept rather than a physical entity. A main link is merely a name used for distinguishing, and a specific name of the main link does not constitute a limitation on the protection scope of this application.

The terminal apparatuses may alternatively communicate with each other. For example, the terminal apparatuses may directly communicate with each other. As shown in (a) to (c) in FIG. 1, the UE1 and the UE2 may directly communicate with each other. For another example, the terminal apparatuses may communicate with each other via another device, for example, the network device or the terminal apparatus. As shown in (a) in FIG. 1, the UE1 and the UE2 may communicate with each other via the network device. As shown in (d) in FIG. 1, the UE1 and the UE2 may communicate with each other via the UE3. An interface for communication between the terminal apparatuses may be denoted as a proximity-based service communication 5 (proximity-based service communication 5, PC5) interface. A link for communication between the terminal apparatuses may be denoted as a sidelink SL, and communication between the terminal apparatuses may also be denoted as SL communication. The sidelink may also be referred to as a side link, a secondary link, or the like. It may be understood that, the sidelink represents a connection relationship between the terminal apparatuses, and is a logical concept rather than a physical entity. The sidelink is merely a name used for distinguishing, and a specific name of the sidelink does not constitute a limitation on the protection scope of this application.

For example, the SL communication between the terminal apparatuses may be used in an internet of vehicles or an intelligent transportation system (intelligent transportation system, ITS), for example, in the V2X communication described above, or may be used in an indoor commercial communication scenario.

Optionally, the SL communication between the terminal apparatuses may be performed within network coverage, or may be performed without network coverage. As shown in (a) and (b) in FIG. 1, the UE1 and other UE may communicate with each other within network coverage. Alternatively, as shown in (c) and (d) in FIG. 1, the UE1 and other UE may communicate with each other outside a network coverage area (out-of-coverage).

Optionally, a time-frequency resource used for the SL communication between the terminal apparatuses may be configured or scheduled by the network device, or may be autonomously selected by the terminal apparatuses. This is not limited.

It may be understood that FIG. 1 is merely a simplified diagram used as an example for ease of understanding. The wireless communication system may further include another network device or another terminal apparatus. Alternatively, the wireless communication system may not include a network device, and no network device is shown in FIG. 1. Embodiments of this application may be applicable to any communication scenario in which a transmit-end device communicates with a receive-end device.

It should be noted that a specific structure of an execution body of the method provided in embodiments of this application is not specifically limited in embodiments of this application, provided that the execution body can run a program that records code for the method provided in embodiments of this application, to perform communication by using the method provided in embodiments of this application. For example, the execution body of the method provided in embodiments of this application may be a terminal apparatus, or may be a functional module that is in the terminal apparatus and that can invoke the program and execute the program.

For ease of understanding embodiments of this application, terms or technologies in this application are briefly described first.

1. Licensed spectrum and unlicensed spectrum

Spectra used in a wireless communication system are classified into two types: the licensed spectrum (licensed spectrum) and the unlicensed spectrum (unlicensed spectrum). In the licensed spectrum, UE may use a spectrum resource based on network device scheduling, and does not need to contend for the spectrum resource. In the unlicensed spectrum, a communication device may use a spectrum resource through contention, and the unlicensed spectrum may also be referred to as a shared spectrum. SL communication over the unlicensed spectrum may be referred to as a sidelink of the unlicensed spectrum or a sidelink unlicense (sidelink unlicense, SL-U), and NR cellular communication over the unlicensed spectrum may be referred to as an NR-U. Bandwidths of the unlicensed spectrum are some defined frequencies, and may vary slightly with requirements of policies and regulations in different regions and countries. For example, the unlicensed spectrum includes 900 MHz (for example, all or a part of 839 MHz to 928 MHz), 2.4 GHz (for example, all or a part of 2401 MHz to 2495 MHz), 3.6 GHz (for example, all or a part of 3655 MHz to 3695 MHz), 5 GHz (for example, all or a part of 5030 MHz to 5990 MHz), or 6 GHz (for example, all or a part of 5945 MHz to 7115 MHz).

Currently, two frequency bands associated with V2X have been defined in the 3GPP, which are respectively an n38 frequency band (2570 MHz to 2620 MHz) and an n47 frequency band (5855 MHz to 5925 MHz). For the n38 frequency band, when the frequency band is used to support a V2X SL service, the frequency band is dedicated for NR V2X in a specific area. The n47 frequency band is generally known as a frequency band in an intelligent transportation system (ITS), and no related network device is deployed for the frequency band.

In addition to the foregoing two frequency bands, currently, a technology for an SL system on a shared spectrum is currently under research in R18, and the shared spectrum includes an n46 frequency band, an n96 frequency band, and an n102 frequency band. A plurality of types of terminal apparatuses exist on the shared frequency band. Therefore, to avoid a conflict and interference between different users, a transmitting node needs to use a spectrum resource through contention, for example, contend for a channel in a listen-before-talk LBT manner. Before accessing a channel and starting to send data, UE needs to sense whether the channel is idle (idle). If the channel has remained idle for a specific period of time, the UE may occupy the channel. If the channel is not idle, the UE may occupy the channel only after the channel restores to being idle.

2. Sidelink for an unlicensed spectrum SL-U

The SL-U mainly means performing SL transmission over the unlicensed spectrum. For the unlicensed spectrum, two access mechanisms, including Type 1 LBT and Type 2 LBT, are introduced in a standard. Type 1 LBT is applied to a COT occupation scenario, and LBT needs to be performed, that is, monitoring needs to be performed before transmission. Monitoring herein may be energy detection, that is, energy is detected at 9 $\mu$s. If the energy exceeds a threshold, a channel is busy. If the energy does not exceed the threshold, it indicates that the channel is idle. Type 2 LBT is used for sharing (share) a COT occupied by other UE in a Type 1 LBT manner. For example, the UE1 preempts, through Type 1 LBT, a transmission opportunity, for example, COT, that is in a period of time, and may indicate other UE to access, in a Type 2 LBT manner, a remaining transmission opportunity that is other than a transmission period occupied by the UE1 and that is in the COT occupied by the UE1.

It should be noted that the Type 2 LBT further includes Type 2A LBT, Type 2B LBT, and Type 2C LBT. The Type 2A LBT indicates that a channel is occupied after an interval of 25 $\mu$s after other transmission ends, that is, the channel may be occupied if it is found, by sensing the channel, that the channel is idle within 25 $\mu$s. Type 2B LBT means that a channel is occupied after an interval of 16 $\mu$s after other transmission ends. A difference between Type 2B LBT and Type 2A LBT is that a difference in duration of sensing channels is 9$\mu$s (25$\mu$s-16$\mu$s=9$\mu$s), that is, duration of a sensing slot. Type 2C LBT indicates that a channel is occupied for transmission (and channel monitoring is not required) after an interval of less than 16 $\mu$s after other transmissions are completed, but a transmission duration cannot exceed 584 $\mu$s.

3. SL resource pool (resource pool)

In NR, SL transmission is performed based on a resource pool. Each resource pool includes one or more sub-channels (sub-channel). Frequency domain resources (namely, quantities of physical resource blocks (physical resource blocks, PRBs)) occupied by the sub-channels in a resource pool are the same, and frequency domain resources occupied by sub-channels in different resource pools may be different.

Optionally, the resource pool may further include a slot used for SL transmission in time domain.

It should be noted that, in embodiments of this application, determining of a resource at a resource selection window may be performed in one resource pool, or may be performed in a plurality of resource pools. This is not limited in this application.

It should be understood that the resource pool may be a physical concept, or may be a logical concept. One resource pool includes a plurality of physical resources, and any physical resource is used for data transmission. Each piece of UE needs to determine a resource from the resource pool during data transmission. The process of determining the resource includes the following two cases:

(1) The UE is under control of a network device, and determines, based on indication information of the network device, a resource from the resource pool for data transmission. This is also referred to as a Mode 1 manner.

(2) The UE autonomously selects a resource from the resource pool for data transmission. This is also referred to as a Mode 2 manner. To be specific, the UE has an opportunity to autonomous make a decision about resource determining and resource allocation. The UE may exclude, through sensing (sensing), some occupied resources or resources causing high interference, and select an idle resource or a resource causing low interference for transmission.

4. Time domain unit and frequency domain unit

Data or information may be carried in a time-frequency resource.

In time domain, the time-frequency resource may include one or more time domain units (which may also be referred to as time units).

In embodiments of this application, the time domain unit may be a radio frame (radio frame, RF), a subframe (subframe), a frame, a half-subframe or a half-frame, a slot (slot), a mini slot (mini slot), a partial slot (partial slot), an orthogonal frequency division multiplexing (orthogonal frequency division multiplexing, OFDM) symbol (symbol), or the like. Alternatively, the time domain unit may be a set of one or more time domain resources. For example, the time domain unit is one or more OFDM symbols in one slot, for example, a quantity of the one or more OFDM symbols is 6, 7, 12, or 14. The one or more time domain units may be consecutive or discrete in terms of time.

Optionally, in embodiments of this application, the time domain resource may also be referred to as a sub-time domain unit, or the "time domain resource" and the "sub-time domain unit" may be a same concept, and are interchangeable with each other.

In addition, duration of the slot may be related to a subcarrier spacing. For example, when the subcarrier spacing is 15 kHz, duration of one slot is 1 millisecond (ms). When the subcarrier spacing is 30 kHz, duration of one slot is 0.5 ms. When the subcarrier spacing is 60 kHz, duration of one slot is 0.25 ms. Similarly, it may be deduced that when the subcarrier spacing is $15*2^u$ kHz, duration of one slot is $2^{-u}$ ms, where u = 0, 1, 2, ....

In frequency domain, the time-frequency resource may include one or more frequency domain units. A frequency domain unit may be a resource element (resource element, RE), a resource block (resource block, RB), a sub-channel, a resource block set (RB set), a resource pool (resource pool), a bandwidth (bandwidth), a bandwidth part (bandwidth part, BWP), a carrier (carrier), a channel (channel), an interlace (interlace), or the like.

5. Power spectrum density (power spectral density, PSD)

Power of a signal on a unit of spectrum is referred to as the power spectral density.

6. COT

The channel occupancy time (channel occupancy time, COT) is introduced for transmission performed on one or more channels after UE performs a channel access process. If a piece of UE obtains, through LBT, a right to use a channel, the UE may occupy the channel in a period of time, and the period of time may be referred to as the COT. The COT may be a concept of time, that is, a consecutive period of transmission time occupied through LBT; or may be a concept of a time-frequency resource, where the time-frequency resource occupies one or more channels in frequency domain, and occupies the foregoing consecutive period of transmission time in time domain.

For example, the UE2 obtains the COT through LBT. To be specific, the UE2 may perform transmission over the COT, and the UE2 may further share the COT resource with other UE (for example, the UE1). It should be understood that there is a corresponding requirement for COT sharing. In other words, the UE2 may share the COT with the UE1 only when some conditions are met. For example, the UE1 is a receive end of a data channel (physical sidelink shared channel (physical sidelink shared channel, PSSCH)) sent by the UE2, and data (PSSCH) of the UE1 is transmitted to the UE2. It should be understood that the conditions that need to be met for COT sharing may be expressed in another form. Details are not described herein again.

7. Hybrid automatic repeat request HARQ

In a data transmission process, a transmission bit error or a packet loss may be caused. Robustness of data transmission may be improved by using a HARQ mechanism.

In the HARQ mechanism, after a transmit end sends data to a receive end, the receive end may send a HARQ feedback to the transmit end, to indicate whether the data is correctly received. For example, if the receive end correctly receives the data, the receive end sends an acknowledgment (acknowledgment, ACK) to the transmit end, and the transmit end considers, based on the ACK, that the data is correctly received and does not need to be retransmitted. If the receive end does not correctly receive the data, the receive end sends a negative acknowledgment (negative acknowledgment, NACK) to the transmit end, and the transmit end considers, based on the NACK, that the data is not correctly received. Optionally, the receive end may send the negative acknowledgment to the transmit end when the data is not correctly received, and does not send an acknowledgment to the transmit end when the data is correctly received.

8. Conflict indication information (conflict indication information)

In a possible implementation, during PSSCHs transmission, time-frequency resources occupied by two PSSCHs may overlap with each other, causing interference to each other and affecting demodulation performance of the two PSSCHs. When a specific condition is met, receiving UE of one PSSCH sends the conflict indication information to sending UE of a PSSCH with a low layer 1 priority (L1 priority). Optionally, after receiving the conflict indication information, the sending UE triggers resource reselection.

In another possible implementation, a terminal apparatus finds that receiving cannot be performed on a time-frequency resource on which a future to-be-received PSSCH is located (for example, sending needs to be performed on the time-frequency resource). When a specific condition is met, the terminal apparatus sends the conflict indication information to sending UE of the PSSCH. Optionally, after receiving the conflict indication information, the sending UE triggers resource reselection.

It should be understood that the condition that needs to be met for sending the conflict indication information is the conventional technology. For details, refer to the protocol 38.213. Details are not described herein.

9. Physical sidelink feedback channel (PSFCH)

The PSFCH in this application is used to carry feedback information.

Optionally, the feedback information may be HARQ acknowledgment information. Optionally, the HARQ acknowledgment information includes an acknowledgment or a negative acknowledgment. Optionally, the HARQ acknowledgement may be indication information of a status, or may be indication information of two statuses, or may be multi-bit indication information. This is not limited in this application.

Optionally, the feedback information may be acknowledgment indication information for a transmit beam. For example, the acknowledgment indication information for the transmit beam includes beam index information, time domain resource indication information, frequency domain resource indication information, information about whether a beam associated with the PSFCH meets a requirement, information about whether the beam associated with the PSFCH is used, and/or information about signal quality of the beam.

Optionally, the feedback information may be conflict indication information.

The PSFCH occupies several symbols or one complete slot. For example, 1, 2, 3, 4, 7, 12, or 14 symbols are occupied. In an example, in a slot with the PSFCH, the last but one OFDM symbol and the last but two OFDM symbol carry the PSFCH. A signal on the last but two symbol is a repetition of a signal on the last but one symbol, so that a receiving terminal apparatus performs AGC adjustment.

The foregoing briefly describes the terms used in this application. Details are not described in the following embodiments. In addition, the foregoing descriptions of the terms are merely descriptions for ease of understanding, and do not constitute a limitation on the protection scope of embodiments of this application.

For the unlicensed spectrum, the terminal apparatus may use a spectrum resource through contention. For example, the terminal apparatus contends for a channel in a listen-before-talk LBT manner, to use the channel. If the terminal apparatus successfully performs the LBT, the terminal apparatus may send data through the channel, and the terminal apparatus may further share the channel with another terminal apparatus. In the HARQ mechanism, after the transmit end sends data to the receive end, the receive end may send a HARQ feedback to the transmit end through a PSFCH, to indicate whether the data is correctly received.

However, when the PSFCH is sent over the unlicensed spectrum, a specific channel bandwidth needs to be occupied. For example, in some cases, the terminal apparatus needs to ensure that transmission of the terminal apparatus occupies at least 80% of bandwidth on one or more corresponding 20 MHz channels. To meet the foregoing channel bandwidth occupation (occupied channel bandwidth, OCB) requirement, in a possible implementation, an interlace (interlace) is introduced as a form of occupation of a frequency domain resource. FIG. 2 is a diagram of an interlace for a subcarrier spacing of 30 kHz according to an embodiment of this application. As shown in FIG. 2, the interlace indicates that a frequency domain resource occupied by a sent signal is of a comb-shaped structure. In FIG. 2, one interlace includes PRBs with a same number. In addition, a resource block set (RB set) in FIG. 2 is a set of RBs that may be used to transmit a signal through a channel, and another RB on the channel may be used for bandwidth protection, and the like.

FIG. 3 is a diagram of PSFCH transmission according to an embodiment of this application. As shown in FIG. 3, after sidelink shared channels (physical sidelink shared channels, PSSCHs) that are sent by UE1 to UE3 are received, PSFCHs are sent to the UE1 to the UE3. Each transmitted PSFCH occupies several common physical resource blocks (common PRBs) and one or more dedicated physical resource blocks (dedicated PRBs) in frequency domain, and the common physical resource blocks do not include the one or more dedicated physical resource blocks. The one or more dedicated physical resource blocks carry ACK/NACK information (for example, a cyclic shift of a base sequence), and are used by a transmit end of a PSSCH to demodulate the ACK/NACK information. The common physical resource block may carry any content, and is not used to demodulate the ACK/NACK information. For example, the common physical resource block may carry some redundant signals/fill-in signals and/or copies of content of the dedicated physical resource block. The common physical resource block is used to occupy a channel bandwidth, to occupy a channel when the OCB requirement is met. It should be noted that, in this application, for different feedback channels, a same common physical resource block may be used (for example, in FIG. 3, each PSFCH occupies all common physical resource blocks in the RB set1), or completely different common physical resource blocks may be used, or partially overlapped common physical resource blocks may be used.

It should be understood that FIG. 3 is merely an example. The dedicated physical resource block is used to carry feedback information. The dedicated physical resource block may carry the ACK/NACK information, or may carry other information. For example, the dedicated physical resource block may further carry conflict indication information, beam-related information, and the like. This is not limited in this application. In this case, the public physical resource block may carry some redundant signals/fill-in signals and/or copies of content of the dedicated physical resource block.

The common physical resource block includes a physical resource block that enables the sent PSFCH to meet the OCB requirement. For example, the physical resource block that enables the sent PSFCH to meet the OCB requirement includes some or all physical resource blocks in an interlace, and the interlace may also be referred to as a common interlace. The common interlace is predefined/(pre-)configured. For example, when a dedicated resource block occupied by a feedback channel is located in the RB set1, the physical resource block that enables the sent PSFCH channel to meet the OCB requirement includes some or all physical resource blocks in the common interlace in the RB set1.

Optionally, the common physical resource block may include some or all physical resource blocks in an interlace, and the interlace may also be referred to as the common interlace (common interlace). In a possible implementation, when a physical resource block in the common interlace is close to the dedicated physical resource block (for example, a distance from the dedicated physical resource block is within 1 MHz), the physical resource block is not used as the common physical resource block.

Optionally, in a possible implementation, the common physical resource block further includes a physical resource block additionally sent by the terminal apparatus.

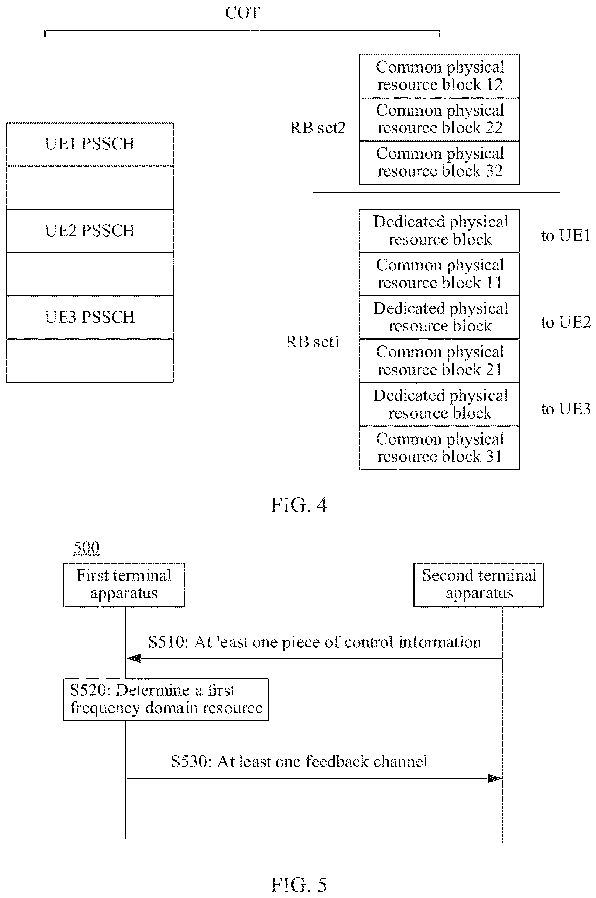

FIG. 4 is a diagram of PSFCH transmission according to an embodiment of this application. In FIG. 4, a terminal apparatus additionally sends a physical resource block. As shown in FIG. 4, after sidelink shared channels (physical sidelink shared channels, PSSCHs) that are sent by UE1 to UE3 are received, PSFCHs are sent to the UE1 to the UE3. COT includes two resource block sets (RB sets). A terminal device transmits a PSFCH in an RB set1, and the RB set1 includes a common physical resource block and a dedicated physical resource block that enables the PSFCH to meet the OCB requirement. In addition, considering that PSFCH occasion in an RB set2 may not be used by UE, the common physical resource block in the RB set1 can occupy only the RB set1, and cannot occupy the RB set2, that is, cannot occupy the COT. To occupy the COT, the terminal device additionally sends a physical resource block in the RB set2. For example, the PSFCH is sent to the UE1. A dedicated physical resource block 11 in the RB set1 is used to carry feedback information, common physical resource blocks 11, 21, and 31 in the RB set1 are used to meet the OCB requirement, and common physical resource blocks 12, 22, and 32 in the RB set2 are used to occupy the COT. For information carried in the dedicated physical resource block and the common physical resource block, refer to related descriptions in FIG. 3. Details are not described herein again.

It may be understood that UE may determine that a physical resource block needs to be additionally sent, or additionally send a physical resource block based on received indication information. This is not limited in this application. Because a PSFCH needs to be sent on both a common physical resource block and a dedicated physical resource block, power of the dedicated physical resource block may be allocated to the common physical resource block. As a result, transmit power of a dedicated physical resource block that is used to carry feedback information is reduced, and PSFCH detection performance is affected.

In view of this, this application provides a communication method and apparatus. A ratio of power of each common physical resource block to power of each dedicated physical resource block is controlled, to increase the transmit power of the dedicated physical resource block that is used to carry the feedback information, thereby improving PSFCH detection performance.

For ease of understanding embodiments of this application, the following several descriptions are provided.

First, in this application, unless otherwise stated or logically conflicted, terms and/or descriptions in different embodiments are consistent and may be mutually referenced, and technical features in different embodiments may be combined based on an internal logic relationship thereof, to form a new embodiment.

Second, in this application, "at least one" means one or more, and "a plurality of" means two or more. "And/or" describes an association relationship between associated objects, and indicates that three relationships may exist. For example, "A and/or B" may indicate the following cases: Only A exists, both A and B exist, and only B exists, where A and B may be singular or plural. In the text descriptions of this application, the character "/" generally indicates an "or" relationship between the associated objects. "At least one of the following items (pieces)" or a similar expression thereof indicates any combination of these items, including a singular item (piece) or any combination of plural items (pieces). For example, at least one of a, b, and c may indicate a or b or c, a and b, a and c, b and c, or a, b, and c. Each of a, b, and c may be in a singular form or a plural form.

Third, in this application, "first", "second", and various numbers are merely used for distinguishing for ease of description, and are not used to limit the scope of embodiments of this application. For example, the numbers are used for distinguishing between different messages rather than describing a particular order or sequence. It should be understood that objects described in such a way are interchangeable in appropriate circumstances, so that a solution other than embodiments of this application can be described.

Fourth, in this application, the terms "include", "have", and any variant thereof are intended to cover a non-exclusive inclusion. For example, a process, a method, a system, a product, or a device that includes a series of steps or units is not necessarily limited to those expressly listed steps or units, but may include another step or unit that is not expressly listed or that is inherent to the process, the method, the product, or the device.

Fifth, in this application, "indicating" may include a direct indication and an indirect indication. When a piece of indication information is described as indicating A, the indication information may directly indicate A or indirectly indicate A, but it does not necessarily indicate that the indication information carries A.

Sixth, in this application, the "protocol" may be a standard protocol in the communication field, for example, may include a 5G protocol, a new radio (new radio, NR) protocol, and a related protocol applied to a future communication system. This is not limited in this application. "Predefinition" may include predefinition, for example, definition in a protocol. "Pre-configuration" may be implemented by storing corresponding code or a corresponding table in advance in a device, or may be implemented in another manner that may indicate related information. A specific implementation thereof is not limited in this application.

Seventh, in this application, "communication" may also be described as "data transmission", "information transmission", "data processing", or the like. "Transmission" includes "sending" and "receiving".

The following describes in detail, with reference to the accompanying drawings, the communication method provided in embodiments of this application. Embodiments provided in this application are applicable to any communication scenario in which a transmit-end device communicates with a receive-end device, for example, can be applied to the communication system shown in FIG. 1.

FIG. 5 is a schematic flowchart of a communication method 200 according to an embodiment of this application. A first terminal apparatus is a transmit end of a PSFCH, a second terminal apparatus is a receive end of the PSFCH, a first resource block is used to carry feedback information, and a second resource block is used to occupy a channel bandwidth to meet an OCB requirement. For example, the first resource block may be the dedicated physical resource block (dedicated PRB), and the second resource block may be the common physical resource block (common PRB). In the following embodiment, that the first resource block carries HARQ information or conflict indication information is used as an example, and shall not constitute a limitation on the protection scope of this application.

S510: The first terminal apparatus receives at least one piece of control information from the second terminal apparatus, where each piece of control information is associated with at least one time-frequency resource.

It should be understood that, that the control information is associated with the at least one time-frequency resource means that the control information may be used to schedule (schedule) or reserve (reserve) the at least one time-frequency resource. The time-frequency resource scheduled by using the control information is located in a same slot as the control information in time domain, and a sub-channel occupied in frequency domain may be obtained based on an FRA (Frequency resource assignment) field in the control information. The time-frequency resource reserved by using the control information is located in a slot after the slot in which the control information is located, and a sub-channel occupied by the time-frequency resource may be obtained based on an FRA (Frequency resource assignment) field, and the slot occupied by the time-frequency resource may be obtained based on a TRA (Time resource assignment) field and/or a reservation periodicity (Resource reservation period) field.

It should be understood that each PSFCH corresponds to one time-frequency resource. When a PSSCH on the time-frequency resource scheduled by using the control information is sent to the first terminal apparatus, the first terminal apparatus transmits HARQ information to a sending device (that is, the second terminal apparatus) of the PSSCH through a PSFCH corresponding to the time-frequency resource, to indicate whether the PSSCH is successfully received, where data is carried in the PSSCH. Success in receiving the data means success in receiving the PSSCH, and a failure in receiving the data means a failure in receiving the PSSCH. In this case, the first terminal apparatus determines, based on the time-frequency resource scheduled by using the control information, a first resource block occupied by the PSFCH.

When a conflict occurs on the time-frequency resource reserved by using the control information, the first terminal apparatus sends the conflict indication information through the PSFCH corresponding to the time-frequency resource scheduled by using the control information or through a PSFCH corresponding to the reserved time-frequency resource on which the conflict occurs. In this case, the first terminal apparatus determines, based on the time-frequency resource scheduled by using the control information or the reserved time-frequency resource on which the conflict occurs, the first resource block occupied by the PSFCH.

It should be understood that each PSFCH occupies at least one first resource block, and the first resource block is used to carry feedback information (the HARQ information and/or the conflict indication information in this embodiment). That each feedback channel corresponds to one time-frequency resource may also be explained as that a first resource block occupied by the feedback channel is determined based on the time-frequency resource. In other words, there is a preset mapping relationship between the first resource block occupied by the feedback channel and the time-frequency resource.

In a possible implementation, a conflict occurs on a time-frequency resource. To be specific, the time-frequency resource overlaps with a time-frequency resource occupied by another PSSCH. Specifically, during PSSCH transmission, time-frequency resources occupied by two PSSCHs may overlap with each other, causing interference to each other and affecting demodulation performance of the two PSSCHs. When a specific condition is met, a receiving terminal and a receiving device (that is, the first terminal apparatus) of one PSSCH send the conflict indication information to sending UE (the second terminal apparatus) of a PSSCH with a low layer 1 priority (L1 priority). Optionally, after receiving the conflict indication information, the sending UE triggers resource reselection.

In another possible implementation, a conflict occurs on a time-frequency resource means that the first terminal apparatus finds that receiving cannot be performed on a time-frequency resource on which a future to-be-received PSSCH is located (for example, there is a need to perform sending on the time-frequency resource). When a specific condition is met, the first terminal apparatus sends the conflict indication information to sending UE (the second terminal apparatus) of the PSSCH. Optionally, after receiving the conflict indication information, the sending UE triggers resource reselection.

It should be understood that the condition that needs to be met for sending the conflict indication information is the conventional technology. For details, refer to the protocol 38.213. Details are not described herein.

It should be understood that each feedback channel carries the HARQ information or the conflict indication information. In other words, at least one first resource block occupied by each feedback channel may carry only the HARQ information or carry only the conflict indication information. All first resource blocks occupied by all feedback channels may carry only the HARQ information or carry only the conflict indication information, or some may carry the HARQ information and some may carry the conflict indication information. This is not limited in this application.

S520: The first terminal apparatus determines a first frequency domain resource, where the first frequency domain resource is used to send a PSFCH. The first frequency domain resource includes N first resource blocks and M second resource blocks. A ratio of transmit power of each second resource block to transmit power of each first resource block that is located in a same resource block set as the second resource block is $\beta$, $\beta$ is less than or equal to 1, and N and M are integers greater than or equal to 1.

The N first resource blocks are used to carry feedback information (the HARQ information and/or the conflict indication information in this embodiment) carried in the feedback channel. The first resource block occupied by each feedback channel is determined based on a time-frequency resource corresponding to the feedback channel.

In a possible implementation, the M second resource blocks are all used to enable PSFCH sending to meet an OCB requirement.

In a possible implementation, a part of resource blocks in the M second resource blocks are used to enable PSFCH sending to meet the OCB requirement, and a resource block other than the part of resource blocks in the M second resource blocks is used for another purpose, for example, is used to occupy COT. For details, refer to related descriptions of FIG. 4.

In addition, transmit power of the first frequency domain resource is less than or equal to maximum transmit power. It should be understood that the maximum transmit power is expressed as $P_{CMAX}$ according to a protocol, and $P_{CMAX}$ is determined by a terminal apparatus based on a parameter specified in the protocol or a (pre-)configured parameter.

It should be noted that because the transmit power is represented in a plurality of forms, there is a mathematical representation difference between the plurality of representation forms. In this application, there is a first relationship between transmit power of the second resource block and transmit power of the first resource block. For ease of expression, when the transmit power of the second resource block and the transmit power of the first resource block are both represented by linear values (a unit is W or mW), a ratio of the transmit power of the second resource block to the transmit power of the first resource block is $\beta$. When the transmit power of the first resource block and the transmit power of the second resource block are represented in another mathematical form, equivalent substitution is performed on the relationship between the transmit power of the first resource block and the transmit power of the second resource block. For example, when the transmit power of the first resource block and the transmit power of the second resource block are represented in a logarithmic form (for example, the unit is dB), a difference between the transmit power of the second resource block and the transmit power of the first resource block is less than 0 (the difference is $10log_{10}(\beta)$). A person skilled in the art should understand that such a simple mathematical transformation also falls within the protection scope of this application.

$\beta$ is a value that remains unchanged within specific time, and $\beta$ may be a value predefined or (pre-)configured in the first terminal apparatus. A source of $\beta$ is not limited in this application. Predefinition means protocol specification, and (pre-)configuration includes system configuration and factory settings.

Because the first frequency domain resource may include resource blocks in different resource block sets, it is specified in this embodiment of this application that a ratio relationship of transmit power of each second resource block to transmit power of each first resource block that located is in a same resource block set as the second resource block is $\beta$. It should be understood that, in a possible implementation, a ratio relationship of transmit power of each second resource block to transmit power of each first resource block in the first frequency domain resource is $\beta$. In this case, the ratio relationship of the transmit power of each second resource block to the transmit power of each first resource block that is in the same resource block set is certainly $\beta$. In another possible implementation, the ratio relationship of the transmit power of each second resource block to the transmit power of each first resource block that is in the same resource block set is $\beta$, but a ratio relationship of transmit power of each second resource block to transmit power of each first resource block that is located in a different resource block set is not $\beta$. For example, a ratio of transmit power of each second resource block in an RB set1 to transmit power of each first resource block in the RB set1 is $\beta$, but a ratio of the transmit power of each second resource block in the RB set1 to transmit power of each first resource block in an RB set2 is not $\beta$.

It should be understood that, when a value of $\beta$ is set, it should be first ensured that transmission on each resource block set meets the OCB requirement, that is, transmission on each resource block set occupies at least 80% of a bandwidth of a channel corresponding to the resource block set. It should be understood that $\beta$ may be predefined, (pre-)configured, or determined by the terminal apparatus.

To send the feedback channel, the first terminal apparatus needs to determine the transmit power of the first resource block and the transmit power of the second resource block.

For ease of description, a quantity of feedback channels is set to T, where T is an integer greater than or equal to 1.

It should be noted that units of power in the following calculation formulas are all dB (dBW or dBmW). The formula for power in this application may alternatively be a linear value (W or mW) or another unit. Mathematical conversion between different units is well known to a person skilled in the art. Therefore, a unit change (for example, conversion from dB to the linear value) or conversion of another mathematical expression form for the following calculation formulas shall fall within the protection scope of this application.

Manner 1: A quantity T of to-be-sent feedback channels and transmit power P of each feedback channel are determined based on the conventional technology, and then transmit power of each first resource block and transmit power of each second resource block are determined.

It should be noted that the to-be-sent feedback channel in this embodiment of this application is a feedback channel that is determined to be sent, and is also a feedback channel that is actually sent.

The transmit power of each feedback channel is allocated to the M second resource blocks and the N first resource blocks in the first frequency domain resource, where quantities of first resource blocks occupied by the feedback channels may be the same or may be different.

Specifically, the transmit power of each first resource block and the transmit power of each second resource block in the first frequency domain resource are determined based on the quantity T of sent feedback channels, the transmit power P of each feedback channel, $\beta$, the quantity N of first resource blocks in the first frequency domain resource, and the quantity M of second resource blocks in the first frequency domain resource.

It should be understood that, after the to-be-sent feedback channel is determined, all first resource blocks occupied by the to-be-sent feedback channel, that is, the first resource block included in the first frequency domain resource, may be certainly determined. All the second resource blocks in the first frequency domain resource include a physical resource block that is used to enable PSFCH transmission to meet the OCB requirement, and optionally, further include another physical resource block that needs to be additionally sent by the terminal apparatus.

In a possible implementation, the transmit power of each feedback channel is allocated to the M second resource blocks and the N first resource blocks in the first frequency domain resource, where quantities of first resource blocks occupied by the feedback channels may be the same or may be different.

For example, the transmit power $P_{1,avg}$ of each first resource block in the first frequency domain resource and the transmit power $P_{2,avg}$ of each second resource block in the first frequency domain resource meet the following relationship:

$$P_{1,avg} = P - 10log_{10}\left(\frac{N}{T} + M \times \frac{\beta}{T}\right), \#(1)$$

$$P_{2,avg} = P - 10log_{10}\left(\frac{N}{\beta \times T} + \frac{M}{T}\right), \#(2),$$

or

$$P_{2,avg} = P_{1,avg} - 10log_{10}\left(\frac{1}{\beta}\right).\#(3)$$

In addition, when the quantities of first resource blocks occupied by the feedback channels are the same, that is, are all k, the foregoing formula may be equivalently represented as the following:

$$P_{1,avg} = P - 10log_{10}\left(k + M \times \frac{\beta}{T}\right), \#(4)$$

$$P_{2,avg} = P - 10log_{10}\left(\frac{k}{\beta} + \frac{M}{T}\right), \#(5),$$

or

$$P_{2,avg} = P_{1,avg} - 10log_{10}\left(\frac{1}{\beta}\right).\#(6)$$

In a possible implementation, summation is first performed on the transmit power of the feedback channels to obtain total transmit power, and then power allocation is separately performed on the first resource block and the second resource block based on a scaling factor of $\beta$. For example, the transmit power $P_{1,avg}$ of each first resource block in the first frequency domain resource and the transmit power $P_{2,avg}$ of each second resource block in the first frequency domain resource meet the following relationship:

$$P_{1,avg} = P + 10log_{10}(T) - 10log_{10}(N + M \times \beta), \#(7)$$

$$P_{2,avg} = P + 10log_{10}(T) - 10log_{10}\left(\frac{N}{\beta} + M\right), \#(8),$$

, or

$$P_{2,avg} = P_{1,avg} - 10log_{10}\left(\frac{1}{\beta}\right).\#(9)$$

In addition, when the quantities of first resource blocks occupied by the feedback channels are the same, that is, are all k, the foregoing formula may be equivalently represented as the following:

$$P_{1,avg} = P + 10log_{10}(T) - 10log_{10}(k \times T + M \times \beta), \#(10)$$

$$P_{2,avg} = P + 10log_{10}(T) - 10log_{10}\left(k \times \frac{T}{\beta} + M\right), \#(11),$$

or

$$P_{2,avg} = P_{1,avg} - 10log_{10}\left(\frac{1}{\beta}\right). \#(12)$$

Further, transmit power $P_{1,N}$ of the N first resource blocks and transmit power $P_{2,M}$ of the M second resource blocks meet the following relationships:

$$P_{1,N} = P_{1,avg} + 10log_{10}(N), \#(13)$$

$$P_{2,M} = P_{2,avg} + 10log_{10}(M). \#(14)$$

Manner 2: A quantity T of to-be-sent feedback channels and transmit power P of each feedback channel are determined based on the conventional technology, and then transmit power of each first resource block and transmit power of each second resource block are determined.

Specifically, transmit power of each first resource block occupied by an $i^{th}$ feedback channel and transmit power of each second resource block that is located in a same resource block set as the $i^{th}$ feedback channel are determined based on a quantity Ti of feedback channels that are located in the same resource block set as the $i^{th}$ feedback channel, transmit power P of the $i^{th}$ feedback channel, a quantity ki of first resource blocks occupied by the $i^{th}$ feedback channel, a quantity Mi of second resource blocks that are located in the same resource block set as the $i^{th}$ feedback channel, and $\beta$.

It should be understood that, after the to-be-sent feedback channel is determined, the first terminal apparatus may determine all first resource blocks occupied by the to-be-sent feedback channel, that is, the first resource block included in the first frequency domain resource. All the second resource blocks in the first frequency domain resource include a physical resource block that is used to enable PSFCH transmission to meet the OCB requirement, and optionally, further include another physical resource block that needs to be additionally sent by the first terminal apparatus.

In a possible implementation, the transmit power of the $i^{th}$ feedback channel is allocated to the first resource block occupied by the $i^{th}$ feedback channel and the second resource block that is located in the same resource block set as the $i^{th}$ feedback channel, where i is greater than or equal to 1.

It should be understood that, being located in the same resource block set as the $i^{th}$ feedback channel means being located in a same resource block set as the first resource block occupied by the $i^{th}$ feedback channel.

For example, the transmit power $P_{1,avg}(i)$ of each first resource block occupied by the $i^{th}$ feedback channel and the transmit power $P_{2,avg}(i)$ of each second resource block that is located in the same resource block set as the $i^{th}$ feedback channel meet the following relationship:

$$P_{1,avg}(i) = P - 10log_{10}\left(ki + Mi \times \frac{\beta}{Ti}\right), \#(15)$$

$$P_{2,avg}(i) = P - 10log_{10}\left(\frac{ki}{\beta} + \frac{Mi}{Ti}\right), \#(16),$$

or

$$P_{2,avg}(i) = P_{1,avg}(i) - 10log_{10}\left(\frac{1}{\beta}\right). \#(17)$$

The foregoing operation is performed on each feedback channel, to learn of the transmit power of each first resource block and the transmit power of ach second resource block.

In a possible implementation, summation is first performed on transmit power of feedback channels in a resource block set to obtain total transmit power of the resource block set, and then power allocation is separately performed on a first resource block and a second resource block in the resource block set based on a scaling factor of $\beta$. It should be understood that the resource block set is the resource block set in which the first resource block occupied by the $i^{th}$ feedback channel is located.

For example, the transmit power $P_{1,avg}(i)$ of each first resource block occupied by the $i^{th}$ feedback channel and the transmit power $P_{2,avg}(i)$ of each second resource block that is located in the same resource block set as the $i^{th}$ feedback channel meet the following relationship:

$$P_{1,avg}(\text{i}) = P + 10log_{10}(Ti) - 10log_{10}(ki \times Ti + Mi \times \beta), \#(18)$$

$$P_{2,avg}(\text{i}) = P + 10log_{10}(Ti) - 10log_{10}\left(ki * \frac{Ti}{\beta} + Mi\right), \#(19),$$

or

$$P_{2,avg}(\text{i}) = P_{1,avg}(\text{i}) - 10log_{10}\left(\frac{1}{\beta}\right). \#(20)$$

The foregoing operation is performed on each feedback channel/each resource block set, to learn of the transmit power of each first resource block and the transmit power of each second resource block.

Further, transmit power $P_{1,k}(i)$ of the ki first resource blocks occupied by the $i^{th}$ feedback channel and transmit power $P_{2,Mi}(i)$ of the Mi second resource blocks that are located in the same resource block set as the $i^{th}$ feedback channel meet the following relationship:

$$P_{1,k}(i) = P_{1,avg}(i) + 10log_{10}(k), \#(21)$$

$$P_{2,Mi}(\text{i}) = P_{2,avg}(i) + 10log_{10}(Mi). \#(22)$$

Manner 3: Transmit power of each first resource block and transmit power of each second resource block are first determined, and then transmit power of each feedback channel is determined.

Case 1: Power limitation based on a downlink path loss does not need to be considered (for example, the first terminal apparatus is outside a coverage area of a network device). In this case, the first terminal apparatus determines a quantity T of to-be-sent feedback channels, and T is less than or equal to a maximum quantity of PSFCHs that can be simultaneously sent by the terminal apparatus.

It should be understood that, after the to-be-sent feedback channel is determined, the first terminal apparatus may determine all first resource blocks occupied by the to-be-sent feedback channel, that is, the first resource block included in the first frequency domain resource. All the second resource blocks in the first frequency domain resource include a physical resource block that is used to enable PSFCH transmission to meet the OCB requirement, and optionally, may further include another physical resource block that needs to be additionally sent by the first terminal apparatus.

Specifically, transmit power of each first resource block in the first frequency domain resource and transmit power of each second resource block in the first frequency domain resource are determined based on maximum transmit power $P_{CMAX}$, the quantity M of all second resource blocks in the first frequency domain resource, the quantity N of all first resource blocks in the first frequency domain resource, and $\beta$.

For example, power allocation is separately performed on the first resource block and the second resource block by using the maximum transmit power $P_{CMAX}$ based on a scaling factor of $\beta$. In this case, the transmit power $P_{1,avg}$ of each first resource block in the first frequency domain resource and the transmit power $P_{2,avg}$ of each second resource block in the first frequency domain resource meet the following relationship:

$$P_{1,avg} = P_{CMAX} - 10log_{10}(N + M \times \beta), \#(23)$$

$$P_{2,avg} = P_{CMAX} - 10log_{10}\left(\frac{N}{\beta} + M\right), \#(24), \text{ or}$$

$$P_{2,avg} = \left(P_{1,avg} - 10log_{10}\left(\frac{1}{\beta}\right)\right). \#(25)$$

Further, total transmit power $P_{1,N}$ of the N first resource blocks and total transmit power $P_{2,M}$ of the M second resource blocks meet the following relationship:

$$P_{1,N} = P_{1,avg} + 10log_{10}(N), \#(26)$$

$$P_{2,M} = P_{2,avg} + 10log_{10}(M). \#(27)$$

In this case, the transmit power of each feedback channel may also be obtained.

In a possible implementation, transmit power of an $i^{th}$ feedback channel is determined based on the maximum transmit power $P_{CMAX}$, the quantity M of second resource blocks in the first frequency domain resource, the quantity N of first resource blocks in the first frequency domain resource, a quantity ki of first resource blocks occupied by the $i^{th}$ feedback channel, and β.

For example, the transmit power $P(i)$ of the $i^{th}$ feedback channel meets the following relationship:

$$P(i) = P_{CMAX} - 10log_{10}\left(\frac{N + M \times \beta}{ki + M \times \beta}\right). \#(28)$$

In a possible implementation, transmit power of an $i^{th}$ feedback channel is determined based on the maximum transmit power $P_{CMAX}$, the quantity M of second resource blocks in the first frequency domain resource, the quantity N of first resource blocks in the first frequency domain resource, a quantity ki of first resource blocks occupied by the $i^{th}$ feedback channel, and a quantity Mi of second resource blocks that are located in a same resource block set as the $i^{th}$ feedback channel, and β.

For example, the transmit power $P(i)$ of the $i^{th}$ feedback channel meets the following relationship:

$$P(i) = P_{CMAX} - 10log_{10}\left(\frac{N + M \times \beta}{ki + Mi \times \beta}\right). \#(29)$$

Case 2: Power based on a downlink path loss needs to be considered. For example, the first terminal apparatus is within a coverage area of a network device. It should be understood that, to avoid interference to transmission of the network device, transmit power of each resource block should not exceed power P1 that is determined based on the downlink path loss.

In a possible implementation, P1 is $P_{PSFCH,one}$ specified by $P_{PSFCH,one}$ in a protocol. $P_{PSFCH,one}$ is determined by the first terminal apparatus based on a predefined or (pre-)configured parameter (including a parameter related to the downlink path loss).

Case 2-1: If a formula in Case 2-1 is used for power allocation, one of the following conditions needs to be met.

(1) A quantity of feedback channels that need to be sent, that is, scheduled (scheduled), does not exceed a maximum quantity of PSFCHs that are simultaneously sent by the first terminal apparatus, and $N_{total}$ first resource blocks occupied by all feedback channels that need to be sent and all $M_{total}$ second resource blocks meet the following:

$$P1 + 10log_{10}(N_{total} + M_{total} \times \beta) \leq P_{CMAX}. \#(30)$$

It should be understood that the $M_{total}$ second resource blocks include a physical resource block that enables the feedback channel that needs to be sent to meet the OCB requirement, and optionally, may further include a physical resource block that needs to be additionally sent by the first terminal apparatus.

It should be understood that, in this case, the terminal apparatus sends all feedback channels that need to be sent. In other words, all the feedback channels that need to be sent are all the to-be-sent feedback channel, $M=M_{total}$, and $N=N_{total}$.

(2) A quantity of feedback channels that need to be sent, that is, scheduled (scheduled), exceeds a maximum quantity of PSFCHs that are simultaneously sent by the first terminal apparatus, the first terminal apparatus determines at least one feedback channel based on priorities of feedback channel in descending order, and $N_{total}$ first resource blocks occupied by the determined feedback channel and all $M_{total}$ second resource blocks meet the following:

$$P1 + 10log_{10}(N_{total} + M_{total} \times \beta) \leq P_{CMAX}. \#(31)$$

It should be understood that the $M_{total}$ second resource blocks include a physical resource block that enables the determined at least one feedback channel to meet the OCB requirement, and optionally, may further include a physical resource block that needs to be additionally sent by the first terminal apparatus.

It should be understood that, in this case, the terminal apparatus sends the determined at least one feedback channel. In other words, the determined at least one feedback channel is the to-be-sent feedback channel, $M=M_{total}$, and $N=N_{total}$. In this case, a quantity of to-be-sent feedback channels is less than or equal to the quantity of feedback channels that need to be sent.

In a possible implementation, when determining the at least one feedback channel based on the priorities of the feedback channels, the terminal apparatus first considers a priority of each feedback channel in a PSFCH that carries the HARQ information, and then considers a priority of each feedback channel in a PSFCH that carries the conflict indication information.

In Case 2-1, the power of each first resource block is $P1$, and the power of each second resource block is as follows:

$$P_{2,\text{avg}} = P1 + 10log_{10}(\beta). \#(32)$$

In a possible implementation, transmit power of an $i^{th}$ feedback channel is determined based on the quantity M of second resource blocks in the first frequency domain resource, a quantity ki of first resource blocks occupied by the $i^{th}$ feedback channel, first power, and $\beta$.

For example, the transmit power $P(i)$ of the $i^{th}$ feedback channel meets the following relationship:

$$P(i) = P1 + 10log_{10}(ki + M \times \beta). \#(33)$$

In a possible implementation, transmit power of an $i^{th}$ feedback channel is determined based on a quantity Mi of second resource blocks that are located in a same resource block set as the $i^{th}$ feedback channel, a quantity ki of first resource blocks occupied by the $i^{th}$ feedback channel, first power, and $\beta$.

For example, the transmit power $P(i)$ of the $i^{th}$ feedback channel meets the following relationship:

$$P(i) = P1 + 10log_{10}(ki + Mi \times \beta). \#(34)$$

Case 2-2: If a formula in Case 2-2 is used for power allocation, one of the following conditions needs to be met:

(1) A quantity of feedback channels that need to be sent, that is, scheduled (scheduled), does not exceed a maximum quantity of PSFCHs that are simultaneously sent by the first terminal apparatus, and $N_{total}$ first resource blocks occupied by all feedback channels that need to be sent and all $M_{total}$ second resource blocks meet the following:

$$P1 + 10log_{10}(N_{total} + M_{total} \times \beta) > P_{CMAX}. \#(35)$$

It should be understood that the $M_{total}$ second resource blocks include a physical resource block that enables the feedback channel that needs to be sent to meet the OCB requirement, and optionally, may further include a physical resource block that needs to be additionally sent by the terminal apparatus.

(2) A quantity of feedback channels that need to be sent, that is, scheduled (scheduled), exceeds a maximum quantity of PSFCHs that are simultaneously sent by the first terminal apparatus, the first terminal apparatus determines at least one feedback channel based on priorities of feedback channel in descending order, and $N_{total}$ first resource blocks occupied by the determined feedback channel and all $M_{total}$ second resource blocks meet the following:

$$P1 + 10log_{10}(N_{total} + M_{total} \times \beta) > P_{CMAX}. \#(36)$$

It should be understood that the $M_{total}$ second resource blocks include a physical resource block that enables the determined at least one feedback channel to meet the OCB requirement, and optionally, may further include a physical resource block that needs to be additionally sent by the first terminal apparatus.

In Case 2-2, the first terminal apparatus first determines a to-be-sent feedback channel. Specifically, the first terminal apparatus determines, based on priorities of PSFCHs in descending order, that a quantity T of to-be-sent feedback channels meets the following:

$$T \geq \max\left(1, \sum\nolimits_{j=1}^{J} L_j\right) . \#(37)$$

When $1 \leq j \leq 8$, $L_j$ is a quantity of PSFCHs that carry the HARQ information and whose priority value (priority value) is j. When j>8, $L_j$ is a quantity of PSFCHs that carry the conflict indication information and whose priority value is j-8.

J is defined as follows: J is a maximum value that meets the following formula:

$$P1 + 10log_{10}(N_{total}(q) + M_{total}(q) \times \beta) \leq P_{CMAX}, \#(38)$$

$$q = max\left(1, \sum\nolimits_{j=1}^{J} L_j\right) . \#(39)$$

If a value J that meets the formula does not exist, J is equal to 0.

It should be understood that, after J is given, q feedback channels whose priorities are sorted in descending order may be obtained based on a relationship between q and J, and q and J meet the relationship shown as the foregoing formula (39). $N_{total(q)}$ first resource blocks are first resource blocks occupied by the q feedback channels, and the $M_{total(q)}$ second resource blocks include a physical resource block that enables the q feedback channels to meet the OCB requirement, or optionally, the $M_{total(q)}$ second resource blocks may further include a physical resource block that needs to be additionally sent by the first terminal apparatus.

In a possible implementation, that the priorities of the feedback channels are sorted in descending order means that the first terminal apparatus first sorts, based on priorities in descending order, feedback channels that carry the HARQ information, and then sorts, based on priorities in descending order, feedback channels that carry the conflict indication information.

It should be understood that, after the to-be-sent feedback channel is determined, the first terminal apparatus may determine all first resource blocks occupied by the to-be-sent feedback channel, that is, the first resource block included in the first frequency domain resource. All the second resource blocks in the first frequency domain resource include a physical resource block that is used to enable PSFCH transmission to meet the OCB requirement, and optionally, may further include another physical resource block that needs to be additionally sent by the first terminal apparatus. In this case, a quantity of to-be-sent feedback channels is less than or equal to a quantity of feedback channels that need to be sent.

Specifically, the transmit power of each first resource block is determined based on maximum transmit power $P_{CMAX}$, first power P1, the quantity M of second resource blocks in the first frequency domain resource, the quantity N of first resource blocks in the first frequency domain resource, and $\beta$.

For example, the transmit power $P_{1,avg}$ of each first resource block meets the following relationship:

$$P_{1,avg} = min(P_{CMAX} - 10log_{10}(N + M \times \beta), P1). \#(40)$$

The transmit power of each second resource block is determined based on the transmit power of each first resource block and $\beta$.

For example, the transmit power $P_{2,avg}$ of each second resource block meets the following relationship:

$$P_{2,avg} = \left(P_{1,avg} - 10log_{10}\left(\frac{1}{\beta}\right)\right) . \#(41)$$

In a possible implementation, the transmit power of each feedback channel is determined based on maximum transmit power $P_{CMAX}$, first power P1, the quantity M of second resource blocks in the first frequency domain resource, the quantity N of first resource blocks in the first frequency domain resource, a quantity k of first resource blocks occupied by each feedback channel, and $\beta$.

For example, the transmit power P of each feedback channel meets the following relationship:

$$P = min(P_{CMAX} - 10log_{10}(N + M \times \beta), P1) + 10log_{10}(k + M \times \beta). \#(42)$$

In a possible implementation, transmit power of an $i^{th}$ feedback channel is determined based on maximum transmit power $P_{CMAX}$, first power P1, the quantity M of second resource blocks in the first frequency domain resource, the quantity N of first resource blocks in the first frequency domain resource, a quantity ki of first resource blocks occupied by the ith feedback channel, and a quantity Mi of second resource blocks that are located in a same resource block set as the ith feedback channel, and β.

For example, the transmit power $P(i)$ of the ith feedback channel meets the following relationship:

$$P(i) = min(P_{CMAX} - 10log_{10}(N + M \times \beta), P1) + 10log_{10}(ki + Mi \times \beta). \#(43)$$

In this embodiment of this application, a distance between the first resource block and the second resource block in frequency domain may be greater than or equal to 1 MHz, or may be less than 1 MHz. When the distance between the first resource block and the second resource block in frequency domain is less than 1 MHz, a transmit power limitation caused by a PSD limitation needs to be considered.

In a possible implementation, the transmit power of each first resource block is less than a first threshold, and the first threshold is determined based on maximum power density $P_{PSD}$ per megahertz, a bandwidth X(s) occupied by the first resource block within an sth megahertz, a bandwidth Y(s) occupied by the second resource block within the sth megahertz, a subcarrier spacing Δf, and β. Units of X(s), Y(s), and Δf are all MHz.

For example, the first threshold $P_{limit1}$ meets the following relationship:

$$P_{limit1} = P_{PSD} - 10log_{10}(max(X(s) + Y(s) \times \beta)) + 10log_{10}(12 \times \Delta f). \tag{44}$$

In a possible implementation, transmit power of a first resource block occupied by an ith feedback channel is less than a second threshold, and the second threshold is determined based on a quantity ki of first resource blocks occupied by the ith feedback channel, maximum power density $P_{PSD}$ per megahertz, a bandwidth X(s) occupied by a first resource block within an sth megahertz, and a bandwidth Y(s) occupied by a second resource block within the sth megahertz, a subcarrier spacing Δf, and β.

For example, the second threshold $P_{limit2}$ meets the following relationship:

$$P_{limit2} = P_{PSD} - 10log_{10}(max(X(s) + Y(s) \times \beta)) + 10log_{10}(ki \times 12 \times \Delta f). \tag{45}$$

In a possible implementation, transmit power of an ith feedback channel is less than a third threshold, and the third threshold is determined based on a quantity ki of first resource blocks occupied by the ith feedback channel, maximum power density $P_{PSD}$ per megahertz, a bandwidth X(s) occupied by a first resource block within an sth megahertz, a bandwidth Y(s) occupied by a second resource block within the sth megahertz, a subcarrier spacing Δf, a quantity Mi of second resource blocks in a resource block set in which the ith feedback channel is located, and β.

For example, the third threshold $P_{limit3}$ meets the following relationship:

$$P_{limit3} = P_{PSD} - 10log_{10}(max(X(s) + Y(s) \times \beta)) + 10log_{10}((ki + Mi \times \beta) \times 12 \times \Delta f). (46)$$

In a possible implementation, transmit power of an ith feedback channel is less than a fourth threshold, and the fourth threshold is determined based on a quantity ki of first resource blocks occupied by the ith feedback channel, maximum power density $P_{PSD}$ per megahertz, a bandwidth X(s) occupied by a first resource block within an sth megahertz, a bandwidth Y(s) occupied by a second resource block within the sth megahertz, a subcarrier spacing Δf, the quantity M of second resource blocks in the first frequency domain resource, and β.

For example, the fourth threshold $P_{limit4}$ meets the following relationship:

$$P_{limit4} = P_{PSD} - 10log_{10}(max(X(s) + Y(s) \times \beta))$$
$$+ 10log_{10}((ki + M \times \beta) \times 12 \times \Delta f). (47)$$

It should be understood that, when a threshold of the transmit power of the first resource block is calculated, a window with a length of 1 MHz slides on a frequency domain resource, $max(X(s) + Y(s) \times \beta$ is a maximum value obtained through calculation according to X+Y×β in any 1-MHz window, and X and Y are located in a same window.

S530: The first terminal apparatus sends at least one feedback channel to the second terminal apparatus on the first frequency domain resource.

In this embodiment of this application, a limitation of the maximum power density per megahertz of a channel on transmit power of a feedback channel is considered, so that reliability of the calculated first resource block and the calculated second resource block are improved.

In this embodiment of this application, the ratio of the transmit power of the first resource block to the transmit power of the second resource block is increased, and a specific power allocation method is provided, so that power of a resource block carrying a feedback channel is increased, and feedback channel detection performance is improved.

It should be understood that the first relationship may be an equivalent description that the ratio of the power of each second resource block to the power of each first resource block is $\beta$, and equivalent descriptions of the first relationship in embodiments of this application shall fall within the protection scope of this application. For example, the ratio of the power of each first resource block to the power of each second resource block is $\alpha$, where $\alpha=1/\beta$. A corresponding formula may be obtained by replacing $\beta$ in the foregoing formula with $1/\alpha$ and performing a series of mathematical transformations. Details are not described in this application.

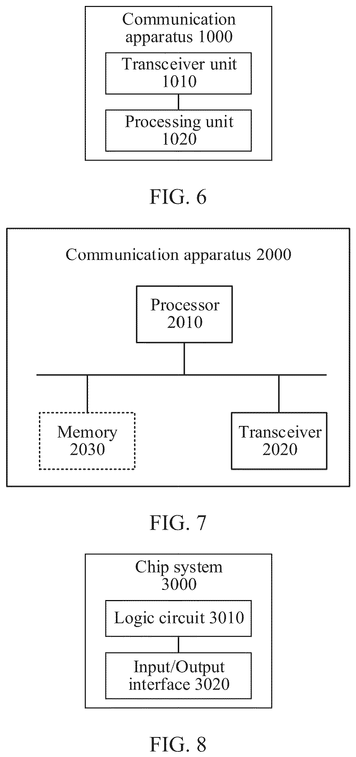

The foregoing describes in detail, with reference to FIG. 1 to FIG. 5, communication-method-side embodiments of this application. The following describes in detail, with reference to FIG. 6 and FIG. 7, communication-apparatus-side embodiments of this application. It should be understood that the descriptions of the apparatus embodiments correspond to the descriptions of the method embodiments. Therefore, for a part that is not described in detail, refer to the foregoing method embodiments.

FIG. 6 is a schematic block diagram of a communication apparatus 1000 according to an embodiment of this application. As shown in FIG. 6, the apparatus 1000 may include a transceiver unit 1010 and a processing unit 1020. The transceiver unit 1010 may communicate with the outside, and the processing unit 1020 is configured to process data. The transceiver unit 1010 may also be referred to as a communication interface or a transceiver unit.

In a possible design, the apparatus 1000 may implement the corresponding steps or procedures performed by the first terminal apparatus in the foregoing method embodiments. The processing unit 1020 is configured to perform the processing-related operations of the first terminal apparatus in the foregoing method embodiments. The transceiver unit 1010 is configured to perform the operations those are related to sending and receiving and those are of the first terminal apparatus in the foregoing method embodiments.

In another possible design, the apparatus 1000 may implement the corresponding steps or procedures performed by the second terminal apparatus in the foregoing method embodiments. The transceiver unit 1010 is configured to perform the operations those are related to sending and receiving and those are of the second terminal apparatus in the foregoing method embodiments, and the processing unit 1020 is configured to perform the processing-related operations of the second terminal apparatus in the foregoing method embodiments.

It should be understood that the device 1000 herein is implemented in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs and a memory, a merged logic circuit, and/or another appropriate component that supports the described function. In an optional example, a person skilled in the art may understand that the device 1000 may be specifically the transmit end in the foregoing embodiments, and may be configured to perform the procedures and/or steps corresponding to the transmit end in the foregoing method embodiments. Alternatively, the device 1000 may be specifically the receive end in the foregoing embodiments, and may be configured to perform the procedures and/or steps corresponding to the receive end in the foregoing method embodiments. To avoid repetition, details are not described herein again.

The device 1000 in the foregoing solutions has a function of implementing the corresponding steps performed by the transmit end in the foregoing method. Alternatively, the device 1000 in the foregoing solutions has a function of implementing the corresponding steps performed by the receive end in the foregoing method. The function may be implemented by hardware, or may be implemented by hardware executing corresponding software. The hardware or the software includes one or more modules corresponding to the foregoing function. For example, the transceiver unit may be replaced by a transceiver (for example, a sending unit of the transceiver unit may be replaced by a transmitter, and a receiving unit of the transceiver unit may be replaced by a receiver), and another unit, for example, the processing unit, may be replaced by a processor, to separately perform the sending and receiving operations and the related processing operations in the method embodiments.

In addition, the transceiver unit may alternatively be a transceiver circuit (for example, may include a receiving circuit and a sending circuit), and the processing unit may be a processing circuit. In embodiments of this application, the apparatus in FIG. 6 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 7 is a schematic block diagram of a communication apparatus 2000 according to an embodiment of this application. As shown in FIG. 7, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030, the processor 2010, and the transceiver 2020 communicate with each other through an internal connection path. The memory 2030 is configured to store instructions, and the processor 2010 may execute the instructions stored in the memory 2030.

In a possible implementation, the apparatus 2000 is configured to implement the procedures and steps corresponding to the first terminal apparatus in the foregoing method embodiments.

In another possible implementation, the apparatus 2000 is configured to implement the procedures and steps corresponding to the second terminal apparatus in the foregoing method embodiments.

It should be understood that the device 2000 may be specifically the transmit end or the receive end in the foregoing embodiments, or may be a chip or a chip system. Correspondingly, the transceiver 2020 may be a transceiver circuit of the chip. This is not limited herein. Specifically, the device 2000 may be configured to perform the steps and/or procedures corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform the steps and/or procedures corresponding to the transmit end or the receive end in the foregoing method embodiments.

In an implementation process, the steps of the foregoing methods may be completed through an integrated logic circuit of hardware in the processor or by using instructions in a form of software. The steps of the method disclosed with reference to embodiments of this application may be directly performed and completed by a hardware processor, or may be performed and completed by using a combination of a hardware module and a software module in the processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing method together with the hardware of the processor. To avoid repetition, details are not described herein again.

It should be noted that, the processor in embodiments of this application may be an integrated circuit chip, and has a signal processing capability. In an implementation process, the steps in the foregoing method embodiments may be completed through an integrated logic circuit of the hardware in the processor or by using instructions in a form of software. The processor may be a general-purpose processor, a digital signal processor, an application-specific integrated circuit, a field programmable gate array or another programmable logic device, a discrete gate, a transistor logic device, or a discrete hardware component. The processor in embodiments of this application may implement or execute the methods, steps, and logical block diagrams disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of a hardware module and a software module in the decoding processor. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps of the foregoing method together with the hardware of the processor.

It may be understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through exemplary but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these memories and any other memory of a proper type.

FIG. 8 is a schematic block diagram of a chip system 3000 according to an embodiment of this application. As shown in FIG. 8, the chip system 3000 (which may also be referred to as a processing system) includes a logic circuit 3010 and an input/output interface (input/output interface) 3020.

The logic circuit 3010 may be a processing circuit in the chip system 3000. The logic circuit 3010 may be coupled to and connected to a storage unit, and invoke instructions in the storage unit, to enable the chip system 3000 to implement the methods and functions in embodiments of this application. The input/output interface 3020 may be an input/output circuit in the chip system 3000, and outputs information processed by the chip system 3000, or inputs to-be-processed data or signaling information into the chip system 3000 for processing.

In a solution, the chip system 3000 is configured to implement the operations performed by the terminal apparatus in the foregoing method embodiments.

For example, the logic circuit 3010 is configured to implement the processing-related operation performed by the first terminal apparatus in the foregoing method embodiments, for example, the processing-related operation performed by the first terminal apparatus in the embodiments shown in FIG. 5. The input/output interface 3020 is configured to implement the sending-related operation and/or the receiving-related operation performed by the first terminal apparatus in the foregoing method embodiments, for example, the sending-related operation and/or the receiving-related operation performed by the first terminal apparatus in the embodiments shown in FIG. 5.

For another example, the logic circuit 3010 is configured to implement the processing-related operation performed by the second terminal apparatus in the foregoing method embodiments, for example, the processing-related operation performed by the second terminal apparatus in the embodiments shown in FIG. 5. The input/output interface 3020 is configured to implement the sending-related operation and/or the receiving-related operation performed by the second terminal apparatus in the foregoing method embodiments, for example, the sending-related operation and/or the receiving-related operation performed by the second terminal apparatus in the embodiments shown in FIG. 5.

An embodiment of this application further provides a computer-readable storage medium. The computer-readable storage medium stores computer instructions used to implement the method performed by the terminal apparatus (for example, a first terminal apparatus or a second terminal apparatus) in the foregoing method embodiments.

An embodiment of this application further provides a computer program product, including instructions. When the instructions are executed by a computer, the method performed by the terminal apparatus (for example, a first terminal apparatus or a second terminal apparatus) in the foregoing method embodiments is implemented.

An embodiment of this application further provides a communication system. The communication system includes the first terminal apparatus and the second terminal apparatus in the foregoing embodiments.

For explanations and beneficial effect of related content in any one of the apparatuses provided above, refer to the corresponding method embodiment provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the foregoing described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. Some or all of the units may be selected based on an actual need to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving at least one piece of control information, wherein each piece of control information is associated with at least one time-frequency resource, and each time-frequency resource corresponds to at least one first resource block; and

   sending at least one feedback channel on a first frequency domain resource, wherein each feedback channel corresponds to one time-frequency resource associated with one piece of control information, the first frequency domain resource comprises N first resource blocks and M second resource blocks, each feedback channel occupies at least one first resource block, transmit power of the first frequency domain resource is less than or equal to maximum transmit power, a ratio of transmit power of each second resource block to transmit power of each first resource block that is located in a same resource block set as the second resource block is β, β is less than or equal to 1, and N and M are integers greater than or equal to 1.

2. The method according to claim 1, wherein the method further comprises:
   allocating transmit power of an $i^{th}$ feedback channel to the M second resource blocks and the N first resource blocks in the first frequency domain resource, wherein i is greater than or equal to 1.

3. The method according to claim 2, wherein the method comprises:
   determining transmit power of each first resource block and transmit power of each second resource block in the first frequency domain resource based on a quantity T of sent feedback channels, transmit power of each feedback channel, β, the quantity N of first resource blocks in the first frequency domain resource, and the quantity M of second resource blocks in the first frequency domain resource.

4. The method according to claim 3, wherein the method comprises:

$$P_{1,avg} = P - 10log_{10}(N/T + M \times \beta/T);$$

$$P_{2,avg} = P - 10log_{10}(N/(\beta \times T) + M/T);$$

   or

$$P_{2,avg} = P_{1,avg} - 10log_{10}\left(\frac{1}{\beta}\right),$$

   wherein
   $P$ is the transmit power of each feedback channel, $P_{1,avg}$ is the transmit power of each first resource block in the first frequency domain resource, and $P_{2,avg}$ is the transmit power of each second resource block in the first frequency domain resource.

5. The method according to claim 1, wherein the method further comprises:
   allocating transmit power of an $i^{th}$ feedback channel to the first resource block occupied by the $i^{th}$ feedback channel and the second resource block that is located in a same resource block set as the $i^{th}$ feedback channel, wherein i is greater than or equal to 1.

6. The method according to claim 5, wherein the method comprises:
   determining, based on a quantity Ti of feedback channels that are located in the same resource block set as the $i^{th}$ feedback channel, the transmit power of the $i^{th}$ feedback channel, a quantity ki of first resource blocks occupied by the i$^{th}$ feedback channel, a quantity Mi of second resource blocks that are located in the same resource block set as the i$^{th}$ feedback channel, and β, transmit power of each first resource block occupied by the i$^{th}$ feedback channel and transmit power of each second resource block that is located in the same resource block set as the i$^{th}$ feedback channel.

7. The method according to claim 6, wherein the method comprises:

$$P_{1,avg}(i) = P(i) - 10log_{10}(ki + Mi \times \beta/Ti);$$

$$P_{2,avg}(i) = P(i) - 10log_{10}(ki/\beta + Mi/Ti);$$

or

$$P_{2,avg}(i) = P_{1,avg}(i) - 10log_{10}\left(\frac{1}{\beta}\right), \text{ wherein}$$

*P(i)* is the transmit power of the i$^{th}$ feedback channel, $P_{1,avg}(i)$ is the transmit power of each first resource block occupied by the i$^{th}$ feedback channel, and $P_{2,avg}(i)$ is the transmit power of each second resource block that is located in the same resource block set as the i$^{th}$ feedback channel.

8. The method according to claim 1, wherein the method further comprises:
determining transmit power of each first resource block in the first frequency domain resource and transmit power of each second resource block in the first frequency domain resource based on the maximum transmit power, the quantity M of all second resource blocks in the first frequency domain resource, the quantity N of all first resource blocks in the first frequency domain resource, and β.

9. The method according to claim 8, wherein the method comprises:

$$P_{1,avg} = P_{\text{CMAX}} - 10log_{10}(N + M \times \beta);$$

$$P_{2,avg} = P_{\text{CMAX}} - 10log_{10}(N/\beta + M);$$

or

$$P_{2,avg} = \left(P_{1,avg} - 10log_{10}\left(\frac{1}{\beta}\right)\right),$$

wherein
$P_{\text{CMAX}}$ is the maximum transmit power, $P_{1,avg}$ is the transmit power of each first resource block in the first frequency domain resource, and $P_{2,avg}$ is the transmit power of each second resource block in the first frequency domain resource.

10. The method according to claim 1, 8, or 9, wherein the method further comprises:
determining transmit power of an i$^{th}$ feedback channel based on the maximum transmit power, the quantity M of second resource blocks in the first frequency domain resource, the quantity N of first resource blocks in the first frequency domain resource, a quantity ki of first resource blocks occupied by the i$^{th}$ feedback channel, and β.

11. The method according to claim 10, wherein the method comprises:

$$P(i) = P_{\text{CMAX}} - 10log_{10}\left(\frac{N+M\times\beta}{ki+M\times\beta}\right), \text{ wherein}$$

$P_{\text{CMAX}}$ is the maximum transmit power, and *P*(i) is the transmit power of the i$^{th}$ feedback channel.

12. The method according to claim 1, 8, or 9, wherein the method further comprises:
determining transmit power of an $i^{th}$ feedback channel based on the maximum transmit power, the quantity M of second resource blocks in the first frequency domain resource, the quantity N of first resource blocks in the first frequency domain resource, a quantity ki of first resource blocks occupied by the $i^{th}$ feedback channel, a quantity Mi of second resource blocks that are located in a same resource block set as the $i^{th}$ feedback channel, and $\beta$.

13. The method according to claim 12, wherein the method comprises:

$$P(i) = P_{\mathrm{CMAX}} - 10log_{10}\left(\frac{N+M\times\beta}{ki+Mi\times\beta}\right), \text{ wherein}$$

$P_{CMAX}$ is the maximum transmit power, and $P(i)$ is the transmit power of the $i^{th}$ feedback channel.

14. The method according to claim 1, wherein both transmit power of each second resource block and transmit power of each first resource block do not exceed first power, and the first power is determined based on a downlink path loss.

15. The method according to claim 14, wherein the method comprises:
the power of each second resource block is $P1 + 10log_{10}(\beta)$, the power of each first resource block is $P1$, and $P1$ is the first power.

16. The method according to claim 14 or 15, wherein the method further comprises: determining transmit power of an $i^{th}$ feedback channel based on the quantity M of second resource blocks in the first frequency domain resource, a quantity ki of first resource blocks occupied by the $i^{th}$ feedback channel, the first power, and $\beta$.

17. The method according to claim 16, wherein the method comprises:

$$P(i) = P1 + 10log_{10}(ki + M \times \beta), \text{ wherein}$$

$P(i)$ is the transmit power of the $i^{th}$ feedback channel, and $P1$ is the first power.

18. The method according to claim 14 or 15, wherein the method further comprises: determining transmit power of an $i^{th}$ feedback channel based on a quantity Mi of second resource blocks that are located in a same resource block set as the $i^{th}$ feedback channel, a quantity ki of first resource blocks occupied by the $i^{th}$ feedback channel, the first power, and $\beta$.

19. The method according to claim 18, wherein the method comprises:

$$P(i) = P1 + 10log_{10}(ki + Mi \times \beta),$$

wherein
$P(i)$ is the transmit power of the $i^{th}$ feedback channel, and $P1$ is the first power.

20. The method according to claim 14, wherein the method comprises:
determining the transmit power of each first resource block based on the maximum transmit power, the first power, the quantity M of second resource blocks in the first frequency domain resource, the quantity N of first resource blocks in the first frequency domain resource, and $\beta$.

21. The method according to claim 20, wherein the method comprises:

$$P_{1,avg} = min(P_{\mathrm{CMAX}} - 10log_{10}(N + M \times \beta), P1),$$

wherein
$P_{CMAX}$ is the maximum transmit power, $P1$ is the first power, and $P_{1,avg}$ is the transmit power of each first resource block.

**22.** The method according to claim 20 or 21, wherein the method comprises:
determining the transmit power of each second resource block based on the transmit power of each first resource block and $\beta$.

**23.** The method according to claim 22, wherein the method comprises:

$$P_{2,\text{avg}} = \left( P_{1,avg} - 10log_{10}\left(\frac{1}{\beta}\right) \right),$$

wherein
$P_{1,avg}$ is the transmit power of each first resource block, and $P_{2,\text{avg}}$ is the transmit power of each second resource block.

**24.** The method according to any one of claims 20 to 23, wherein the method further comprises:
determining transmit power of an $i^{th}$ feedback channel based on the maximum transmit power, the first power, the quantity M of second resource blocks in the first frequency domain resource, the quantity N of first resource blocks in the first frequency domain resource, a quantity ki of first resource blocks occupied by the $i^{th}$ feedback channel, and $\beta$.

**25.** The method according to claim 24, wherein the method comprises:

$$P(i) = min(P_{\text{CMAX}} - 10log_{10}(N + M \times \beta), P1) + 10log_{10}(ki + M \times \beta),$$

wherein
$P_{\text{CMAX}}$ is the maximum transmit power, $P1$ is the first power, and $P(i)$ is the transmit power of the $i^{th}$ feedback channel.

**26.** The method according to any one of claims 20 to 23, wherein the method further comprises:
determining transmit power of an $i^{th}$ feedback channel based on the maximum transmit power, the first power, the quantity M of second resource blocks in the first frequency domain resource, the quantity N of first resource blocks in the first frequency domain resource, a quantity ki of first resource blocks occupied by the $i^{th}$ feedback channel, a quantity Mi of second resource blocks that are located in a same resource block set as the $i^{th}$ feedback channel, and $\beta$.

**27.** The method according to claim 26, wherein the method comprises:

$$P(i) = min(P_{\text{CMAX}} - 10log_{10}(N + M \times \beta), P1) + 10log_{10}(ki + Mi \times \beta),$$

wherein
$P_{\text{CMAX}}$ is the maximum transmit power, $P1$ is the first power, and $P(i)$ is the transmit power of the $i^{th}$ feedback channel.

**28.** A communication apparatus, comprising a module or a unit configured to perform the method according to any one of claims 1 to 27.

**29.** A communication apparatus, wherein the communication apparatus comprises a processor, the processor is coupled to a memory, the memory stores instructions, and when the instructions are run by the processor, the communication apparatus is enabled to perform the method according to any one of claims 1 to 27.

**30.** A communication system, comprising a first terminal apparatus, wherein the first terminal apparatus is configured to perform the method according to any one of claims 1 to 27.

**31.** A computer-readable storage medium, wherein the computer-readable storage medium is configured to store a computer program, and when the computer program is run on a computer, the computer is enabled to perform the method according to any one of claims 1 to 27.

**32.** A chip, comprising a processor, configured to invoke a computer program from a memory and run the computer program, to enable a communication apparatus in which the chip is installed to perform the method according to any one of claims 1 to 27.

**33.** A computer program product, wherein when the computer program product is executed by a communication apparatus, the method according to any one of claims 1 to 27 is implemented.

FIG. 1

Resource block set#1 (RB set#1)

| 0 | 1 | 2 | 3 | 4 | 0 | 1 | 2 | 3 | 4 | · · · | 0 | 1 | 2 | 3 | 4 |

FIG. 2

COT

| UE1 PSSCH | RB set1 | Common physical resource block 1 | to UE1 |
|---|---|---|---|
| | | Dedicated physical resource block 1 | |
| UE2 PSSCH | | Common physical resource block 2 | to UE2 |
| | | Dedicated physical resource block 2 | |
| UE3 PSSCH | | Common physical resource block 3 | to UE3 |
| | | Dedicated physical resource block 3 | |

FIG. 3

COT

| | | | |
|---|---|---|---|
| | | Common physical resource block 12 | |
| | RB set2 | Common physical resource block 22 | |
| UE1 PSSCH | | Common physical resource block 32 | |

| | | Dedicated physical resource block | to UE1 |
| UE2 PSSCH | | Common physical resource block 11 | |
| | | Dedicated physical resource block | to UE2 |
| UE3 PSSCH | RB set1 | Common physical resource block 21 | |
| | | Dedicated physical resource block | to UE3 |
| | | Common physical resource block 31 | |

FIG. 4

500

| First terminal apparatus | | Second terminal apparatus |
|---|---|---|

S510: At least one piece of control information

S520: Determine a first frequency domain resource

S530: At least one feedback channel

FIG. 5

32

Communication
apparatus 1000

Transceiver unit
1010

Processing unit
1020

FIG. 6

Communication apparatus 2000

Processor
2010

Memory
2030

Transceiver
2020

FIG. 7

Chip system
3000

Logic circuit 3010

Input/Output
interface 3020

FIG. 8

## INTERNATIONAL SEARCH REPORT

| International application No. |
| --- |
| **PCT/CN2024/105757** |

| A. | CLASSIFICATION OF SUBJECT MATTER |
| --- | --- |
| | H04W4/70(2018.01)i |

According to International Patent Classification (IPC) or to both national classification and IPC

| B. | FIELDS SEARCHED |
| --- | --- |

Minimum documentation searched (classification system followed by classification symbols)

IPC:H04W.H04L

Documentation searched other than minimum documentation to the extent that such documents are included in the fields searched

Electronic data base consulted during the international search (name of data base and, where practicable, search terms used)

3GPP, CNTXT, ENTXT, ENTXTC: 功率, 公共, 公共物理资源块, 公用, 通用, 物理资源块, 专用, 专用物理资源块, 资源块, 大, 小, 多, 少, 高, 低, OCB, HARQ, conflict, common, dedicated, high, less, low, more, increas+, decreas+, power, PRB, PSFCH, ratio, RB?, PRB?, dedicat+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | WO 2024119435 A1 (NEC CORP.) 13 June 2024 (2024-06-13)<br>description, paragraphs [0038]-[00131] | 1-33 |
| PX | WO 2024087755 A1 (LENOVO (BEIJING) LTD.) 02 May 2024 (2024-05-02)<br>description, paragraphs [0065]-[00110] | 1-33 |
| PX | CN 117997492 A (HUAWEI TECHNOLOGIES CO., LTD.) 07 May 2024 (2024-05-07)<br>description, paragraphs [0082]-[0351] | 1-33 |
| X | ZTE et al. "Discussion on physical layer structures and procedures for SL-U"<br>*R1-2303401, 3GPP TSG RAN WG1 #112bis-e*, 26 April 2023 (2023-04-26),<br>pages 14-17 | 1-33 |
| X | NOKIA et al. "On Physical Channel Design Framework for SL-U"<br>*R1-2302290, 3GPP TSG RAN WG1 #112bis-e*, 26 April 2023 (2023-04-26),<br>pp. 4-10 | 1-33 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **11 October 2024** | **16 October 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/105757** |

### C.    DOCUMENTS CONSIDERED TO BE RELEVANT

| Category* | Citation of document, with indication, where appropriate, of the relevant passages | Relevant to claim No. |
| --- | --- | --- |
| A | WO 2023052049 A1 (TELEFONAKTIEBOLAGET LM ERICSSON (PUBL)) 06 April 2023 (2023-04-06) entire document | 1-33 |

Form PCT/ISA/210 (second sheet) (July 2022)

**INTERNATIONAL SEARCH REPORT**
Information on patent family members

International application No.

**PCT/CN2024/105757**

| Patent document cited in search report | | | Publication date (day/month/year) | Patent family member(s) | | | Publication date (day/month/year) |
|---|---|---|---|---|---|---|---|
| WO | 2024119435 | A1 | 13 June 2024 | None | | | |
| WO | 2024087755 | A1 | 02 May 2024 | None | | | |
| CN | 117997492 | A | 07 May 2024 | WO | 2024093649 | A1 | 10 May 2024 |
| WO | 2023052049 | A1 | 06 April 2023 | CN | 118044270 | A | 14 May 2024 |
| | | | | CN | 118488528 | A | 13 August 2024 |
| | | | | EP | 4409966 | A1 | 07 August 2024 |

**REFERENCES CITED IN THE DESCRIPTION**

**Patent documents cited in the description**

- CN 202311018798